# EUROPEAN PATENT APPLICATION

(11) **EP 3 683 664 A1**
(43) Date of publication of application: **22.07.2020**
(21) Application number: 18867398.2
(22) Date of filing: 05.02.2018
(51) Int. Cl.: G06F 3/0484, G06F 9/445

(54) **ICON DISPLAY METHOD, DEVICE, AND SYSTEM**

(30) Priority: 20.10.2017 CN 201710983444
(71) Applicant: Huawei Technologies Co., Ltd., Longgang District Shenzhen, Guangdong 518129 (CN)
(72) Inventor: XIA, Panbin, Shenzhen Guangdong 518129 (CN)
(74) Representative: Epping - Hermann - Fischer
(86) International application number: PCT/CN2018/075325
(87) International publication number: WO 2019/075962

(57) **Abstract**

An icon display method, a device, and a system are provided, to automatically display a service icon on a desktop of an electronic device, so that a user directly uses a service item by using the service icon, thereby reducing user operations and improving user experience. A specific solution is as follows: An electronic device automatically determines a first service item in a first application (401); displays a first icon on a display interface of the electronic device, where the first icon corresponds to the first service item (402); and displays an interaction interface of the first service item in response to an operation performed on the first icon (403).

## Description

This application claims priority to Chinese Patent Application No. 201710983444.5, filed with the China National Intellectual Property Administration on October 20, 2017 and entitled "SERVICE PROVIDING METHOD, TERMINAL, AND SERVER", which is incorporated herein by reference in its entirety.

### TECHNICAL FIELD

Embodiments of this application relate to the field of electronic technologies, and in particular, to an icon display method, a device, and a system.

### BACKGROUND

With continuous development of mobile Internet, the mobile Internet can provide increasingly abundant services, and increasing applications are installed on a terminal. Each application may provide a plurality of services and functions for a user. To use, on a terminal, each service provided by an application, a user needs to perform a complex operation and wait for a long time. For example, the user needs to first tap an application icon on a desktop, wait for the application to start, and find the service by using a menu after the application is entered, and then uses the service. During start of the application, a launch interface may further need to be waited for. In addition, after the application is entered, a plurality of menus may be required to find the service that needs to be used.

In the prior art, a service use solution that is based on a shortcode function of the Android version O is provided, to reduce operation steps performed by a user to use a service. In this solution, after a user touches and holds an application icon on a desktop of a terminal, a menu list may pop up on the desktop, and the user may drag a service in the menu list to the desktop to form a service icon that serves as a shortcut, and subsequently, directly use the service by tapping the service icon on the desktop.

In the existing solution that is based on the shortcode function, a user needs to perform manual operations such as touching and holding an application icon and dragging a service to a desktop to display a service icon on the desktop, so that the service can be used by using the service icon. In this case, user experience is relatively poor.

### SUMMARY

Embodiments of this application provide an icon display method, a device, and a system, to automatically display a service icon on a display interface of an electronic device, so that a user directly uses a service item by using the service icon, thereby reducing user operations and improving user experience.

To achieve the foregoing objective, the following technical solutions are used in the embodiments of this application:

According to an aspect, an embodiment of this application provides an icon display method that is applied to an electronic device with a touchscreen, and the method includes: automatically determining, by the electronic device, a first service item in a first application; displaying a first icon on a display interface of the electronic device, where the first icon corresponds to the first service item; and displaying, by the electronic device, an interaction interface of the first service item in response to an operation performed on the first icon.

In this solution, the electronic device can automatically determine a service item, and automatically display, on the display interface, a service icon corresponding to the service item, so that a user can directly use the service item by using the service icon on the display interface, and the user does not need to manually set the service icon corresponding to the service item, thereby reducing operation steps performed by the user to use a service, shortening a waiting time of the user, and improving user experience.

In a possible design, the automatically determining, by the electronic device, a first service item in a first application includes: automatically determining, by the electronic device, the first service item in the first application based on a service item use record and/or service item use frequency of the electronic device.

In this solution, the electronic device may automatically determine the first service item in the first application based on a recently used service item or a frequently used service item.

In another possible design, the automatically determining, by the electronic device, a first service item in a first application includes: automatically determining, by the electronic device, the first service item in the first application based on at least one of a calendar, time, or a location.

In another possible design, the automatically determining, by the electronic device, a first service item in a first application includes: automatically determining, by the electronic device, the first service item in the first application based on a scenario mode. The scenario mode may include at least one of an in-vehicle mode, a driving mode, a mute mode, an airplane mode, an offline mode, an outdoor mode, or a conference mode.

In another possible design, the automatically determining, by the electronic device, a first service item in a first application includes: automatically determining, by the electronic device, the first service item in the first application based on an indication of a server.

In this solution, the electronic device may automatically determine the first service item in the first application based on a recommendation and the indication of the server.

In another possible design, the displaying, by the electronic device, a first icon on a display interface of the electronic device includes: displaying, by the electronic device, the first icon on the display interface of the electronic device based on use frequency or a last use time of the first service item.

In this solution, the electronic device may display, in a preset area on the display interface, an icon corresponding to a frequently used or recently used service item.

In another possible design, the display interface of the electronic device is a home screen of the electronic device.

According to another aspect, an embodiment of this application provides a service item recommendation method that is applied to a server, and the method includes: generating, by the server, indication information, where the indication information includes an identifier of a first service item in a first application; and sending, by the server, the indication information to an electronic device, where the indication information is used to instruct the electronic device to determine the first service item and display, on a display interface, an icon corresponding to the first service item.

In this solution, the server may recommend a service item to the electronic device, and the electronic device may automatically determine the first service item based on the recommendation of the server.

According to another aspect, an embodiment of this application provides an electronic device, including: a determining unit, configured to automatically determine a first service item in a first application; a first display unit, configured to display a first icon on a display interface of the electronic device, where the first icon corresponds to the first service item; and a second display unit, configured to display an interaction interface of the first service item in response to an operation performed on the first icon.

In a possible design, the determining unit is specifically configured to automatically determine the first service item in the first application based on a service item use record and/or service item use frequency of the electronic device.

In a possible design, the determining unit is specifically configured to automatically determine the first service item in the first application based on at least one of a calendar, time, or a location.

In a possible design, the determining unit is specifically configured to automatically determine the first service item in the first application based on a scenario mode. The scenario mode may include at least one of an in-vehicle mode, a driving mode, a mute mode, an airplane mode, an offline mode, an outdoor mode, or a conference mode.

In a possible design, the determining unit is specifically configured to automatically determine the first service item in the first application based on an indication of a server.

In a possible design, the first display unit is specifically configured to display the first icon on the display interface of the electronic device based on use frequency or a last use time of the first service item.

In a possible design, the display interface of the electronic device is a home screen of the electronic device.

According to another aspect, an embodiment of this application provides a server, including: a generation unit, configured to generate indication information, where the indication information includes an identifier of a first service item in a first application; and a sending unit, configured to send the indication information to an electronic device, where the indication information is used to instruct the electronic device to determine the first service item and display, on a display interface, an icon corresponding to the first service item.

According to another aspect, an embodiment of this application provides a method for displaying a graphical user interface (graphical user interface, GUI), the method is implemented in an electronic device with a touchscreen, and the method includes: displaying, by the electronic device, a first GUI on the touchscreen in response to automatically determining a first service item in a first application, where a first icon is displayed on the first GUI, and the first icon corresponds to the first service item; and displaying, by the electronic device, a second GUI on the touchscreen in response to an operation performed on the first icon, where an interaction interface of the first service item is displayed on the second GUI.

In this solution, the electronic device can automatically determine a service item, and automatically display, on the first GUI, a service icon corresponding to the service item, so that a user can directly use the service item by using the service icon on the display interface, and the user does not need to manually set the service icon corresponding to the service item, thereby reducing operation steps performed by the user to use a service, shortening a waiting time of the user, and improving user experience.

In a possible implementation, the automatically determining, by the electronic device, a first service item in a first application includes: automatically determining, by the electronic device, the first service item in the first application based on a service item use record and/or service item use frequency of the electronic device.

In this solution, the electronic device may automatically determine the first service item in the first application based on a recently used service item or a frequently used service item.

In a possible design, the automatically determining, by the electronic device, a first service item in a first application includes: automatically determining, by the electronic device, the first service item in the first application based on at least one of a calendar, time, or a location.

In a possible design, the automatically determining, by the electronic device, a first service item in a first application includes: automatically determining, by the electronic device, the first service item in the first application based on a scenario mode. The scenario mode may include at least one of an in-vehicle mode, a driving mode, a mute mode, an airplane mode, an offline mode, an outdoor mode, or a conference mode.

In a possible design, the automatically determining, by the electronic device, a first service item in a first application includes: automatically determining, by the electronic device, the first service item in the first application based on an indication of a server.

In this solution, the electronic device may automatically determine the first service item in the first application based on a recommendation and the indication of the server.

In a possible design, the displaying, by the electronic device, a first GUI on the touchscreen, where a first icon is displayed on the first GUI, and the first icon corresponds to the first service item includes: displaying, by the electronic device, the first GUI on the touchscreen based on use frequency or a last use time of the first service item, where the first icon is displayed on the first GUI, and the first icon corresponds to the first service item.

In this solution, the electronic device may display, at a preset location on the first GUI, an icon corresponding to a frequently used or recently used service item.

In a possible design, the first GUI is a home screen of the electronic device.

According to another aspect, an embodiment of this application provides an icon display method that is applied to an electronic device with a touchscreen, and the method includes: automatically determining, by the electronic device, a first service item in a first application based on a service item use record and/or service item use frequency of the electronic device; displaying a first icon on a home screen of the electronic device, where the first icon corresponds to the first service item; and displaying an interaction interface of the first service item in response to an operation performed on the first icon.

According to another aspect, an embodiment of this application provides an icon display method that is applied to an electronic device with a touchscreen, and the method includes: automatically determining, by the electronic device, a first service item in a first application based on at least one of a calendar, time, or a location; displaying a first icon on a home screen of the electronic device, where the first icon corresponds to the first service item; and displaying an interaction interface of the first service item in response to an operation performed on the first icon.

According to another aspect, an embodiment of this application provides an icon display method that is applied to an electronic device with a touchscreen, and the method includes: automatically determining, by the electronic device, a first service item in a first application based on a scenario mode, where the scenario mode includes at least one of an in-vehicle mode, a driving mode, a mute mode, an airplane mode, an offline mode, an outdoor mode, or a conference mode; displaying a first icon on a home screen of the electronic device, where the first icon corresponds to the first service item; and displaying an interaction interface of the first service item in response to an operation performed on the first icon.

According to another aspect, an embodiment of this application provides an icon display method that is applied to an electronic device with a touchscreen, and the method includes: automatically determining, by the electronic device, a first service item in a first application based on an indication of a server; displaying a first icon on a home screen of the electronic device, where the first icon corresponds to the first service item; and displaying, by the electronic device, an interaction interface of the first service item in response to an operation performed on the first icon.

In a possible design, the home screen includes a first area, and the displaying a first icon on a home screen of the electronic device includes: displaying, in the first area on the home screen, the first icon corresponding to the frequently used or recently used first service item, where the first area is located at a bottom, a top, a lower right corner, or a lower left corner of the home screen.

According to another aspect, an embodiment of this application provides an icon display method that is applied to an electronic device with a touchscreen, and the method includes: automatically determining, by the electronic device, a first service item in a first application based on a service item use record and/or service item use frequency of the electronic device; displaying a first icon on a HiBoard interface of the electronic device, where the HiBoard interface is an interface entered after rightward sliding is performed from a home screen, and the first icon corresponds to the first service item; and displaying an interaction interface of the first service item in response to an operation performed on the first icon.

According to another aspect, an embodiment of this application provides an icon display method that is applied to an electronic device with a touchscreen, and the method includes: automatically determining, by the electronic device, a first service item in a first application based on at least one of a calendar, time, or a location; displaying a first icon on a HiBoard interface of the electronic device, where the HiBoard interface is an interface entered after rightward sliding is performed from a home screen, and the first icon corresponds to the first service item; and displaying an interaction interface of the first service item in response to an operation performed on the first icon.

According to another aspect, an embodiment of this application provides an icon display method that is applied to an electronic device with a touchscreen, and the method includes: automatically determining, by the electronic device, a first service item in a first application based on a scenario mode, where the scenario mode includes at least one of an in-vehicle mode, a driving mode, a mute mode, an airplane mode, an offline mode, an outdoor mode, or a conference mode; displaying a first icon on a HiBoard interface of the electronic device, where the HiBoard interface is an interface entered after rightward sliding is performed from a home screen, and the first icon corresponds to the first service item; and displaying an interaction interface of the first service item in response to an operation performed on the first icon.

According to another aspect, an embodiment of this application provides an icon display method that is applied to an electronic device with a touchscreen, and the method includes: automatically determining, by the electronic device, a first service item in a first application based on an indication of a server; displaying a first icon on a HiBoard interface of the electronic device, where the HiBoard interface is an interface entered after rightward sliding is performed from a home screen; and displaying, by the electronic device, an interaction interface of the first service item in response to an operation performed on the first icon.

In a possible design, the HiBoard interface of the electronic device includes a first area, and the displaying a first icon on a HiBoard interface of the electronic device includes: displaying, in the first area on the HiBoard interface of the electronic device, the first icon corresponding to the frequently used or recently used first service item, where the first area is located at a bottom, a top, a lower right corner, or a lower left corner of the interface.

According to another aspect, an embodiment of this application provides an icon display method that is applied to an electronic device with a touchscreen, and the method includes: automatically determining, by the electronic device, a first service item in a first application based on a service item use record and/or service item use frequency of the electronic device; triggering display of a first display interface in response to a preset gesture, and displaying a first icon on the first display interface, where the first icon corresponds to the first service item; and displaying an interaction interface of the first service item in response to an operation performed on the first icon.

According to another aspect, an embodiment of this application provides an icon display method that is applied to an electronic device with a touchscreen, and the method includes: automatically determining, by the electronic device, a first service item in a first application based on at least one of a calendar, time, or a location; triggering display of a first display interface in response to a preset gesture, and displaying a first icon on the first display interface, where the first icon corresponds to the first service item; and displaying an interaction interface of the first service item in response to an operation performed on the first icon.

According to another aspect, an embodiment of this application provides an icon display method that is applied to an electronic device with a touchscreen, and the method includes: automatically determining, by the electronic device, a first service item in a first application based on a scenario mode, where the scenario mode includes at least one of an in-vehicle mode, a driving mode, a mute mode, an airplane mode, an offline mode, an outdoor mode, or a conference mode; triggering display of a first display interface in response to a preset gesture, and displaying a first icon on the first display interface, where the first icon corresponds to the first service item; and displaying an interaction interface of the first service item in response to an operation performed on the first icon.

According to another aspect, an embodiment of this application provides an icon display method that is applied to an electronic device with a touchscreen, and the method includes: automatically determining, by the electronic device, a first service item in a first application based on an indication of a server; triggering display of a first display interface in response to a preset gesture, and displaying a first icon on the first display interface, where the first icon corresponds to the first service item; and displaying, by the electronic device, an interaction interface of the first service item in response to an operation performed on the first icon.

According to another aspect, an embodiment of this application provides an electronic device, and the electronic device includes a touchscreen, and includes: a determining unit, configured to automatically determine a first service item in a first application based on a service item use record and/or service item use frequency of the electronic device; and a display unit, configured to display a first icon on a home screen of the electronic device, where the first icon corresponds to the first service item, where the display unit is further configured to display an interaction interface of the first service item in response to an operation performed on the first icon.

According to another aspect, an embodiment of this application provides an electronic device, and the electronic device includes a touchscreen, and includes: a determining unit, configured to automatically determine a first service item in a first application based on at least one of a calendar, time, or a location; and a display unit, configured to display a first icon on a home screen of the electronic device, where the first icon corresponds to the first service item, where the display unit is further configured to display an interaction interface of the first service item in response to an operation performed on the first icon.

According to another aspect, an embodiment of this application provides an electronic device, and the electronic device includes a touchscreen, and includes: a determining unit, configured to automatically determine a first service item in a first application based on a scenario mode, where the scenario mode includes at least one of an in-vehicle mode, a driving mode, a mute mode, an airplane mode, an offline mode, an outdoor mode, or a conference mode; and a display unit, configured to display a first icon on a home screen of the electronic device, where the first icon corresponds to the first service item, where the display unit is further configured to display an interaction interface of the first service item in response to an operation performed on the first icon.

In a possible design, the home screen includes a first area, and the display unit is specifically configured to display, in the first area on the home screen, the first icon corresponding to the frequently used or recently used first service item, where the first area is located at a bottom, a top, a lower right corner, or a lower left corner of the home screen.

According to another aspect, an embodiment of this application provides an electronic device, and the electronic device includes a touchscreen, and includes: a determining unit, configured to automatically determine a first service item in a first application based on a service item use record and/or service item use frequency of the electronic device; and a display unit, configured to display a first icon on a HiBoard interface of the electronic device, where the HiBoard interface is an interface entered after rightward sliding is performed from a home screen, and the first icon corresponds to the first service item, where the display unit is further configured to display an interaction interface of the first service item in response to an operation performed on the first icon.

According to another aspect, an embodiment of this application provides an electronic device, and the electronic device includes a touchscreen, and includes: a determining unit, configured to automatically determine a first service item in a first application based on at least one of a calendar, time, or a location; and a display unit, configured to display a first icon on a HiBoard interface of the electronic device, where the HiBoard interface is an interface entered after rightward sliding is performed from a home screen, and the first icon corresponds to the first service item, where the display unit is further configured to display an interaction interface of the first service item in response to an operation performed on the first icon.

According to another aspect, an embodiment of this application provides an electronic device, and the electronic device includes a touchscreen, and includes: a determining unit, configured to automatically determine a first service item in a first application based on a scenario mode, where the scenario mode includes at least one of an in-vehicle mode, a driving mode, a mute mode, an airplane mode, an offline mode, an outdoor mode, or a conference mode; and a display unit, configured to display a first icon on a HiBoard interface of the electronic device, where the HiBoard interface is an interface entered after rightward sliding is performed from a home screen, and the first icon corresponds to the first service item, where the display unit is further configured to display an interaction interface of the first service item in response to an operation performed on the first icon.

In a possible design, the HiBoard interface of the electronic device includes a first area, and the display unit is specifically configured to display, in the first area on the HiBoard interface of the electronic device, the first icon corresponding to the frequently used or recently used first service item, where the first area is located at a bottom, a top, a lower right corner, or a lower left corner of the interface.

According to another aspect, an embodiment of this application provides an electronic device, and the electronic device includes a touchscreen, and includes: a determining unit, configured to automatically determine a first service item in a first application based on a service item use record and/or service item use frequency of the electronic device; and a display unit, configured to: trigger display of a first display interface in response to a preset gesture, and display a first icon on the first display interface, where the first icon corresponds to the first service item, where the display unit is further configured to display an interaction interface of the first service item in response to an operation performed on the first icon.

According to another aspect, an embodiment of this application provides an electronic device, and the electronic device includes a touchscreen, and includes: a determining unit, configured to automatically determine a first service item in a first application based on at least one of a calendar, time, or a location; and a display unit, configured to: trigger display of a first display interface in response to a preset gesture, and display a first icon on the first display interface, where the first icon corresponds to the first service item, where the display unit is further configured to display an interaction interface of the first service item in response to an operation performed on the first icon.

According to another aspect, an embodiment of this application provides an electronic device, and the electronic device includes a touchscreen, and includes: a determining unit, configured to automatically determine a first service item in a first application based on a scenario mode, where the scenario mode includes at least one of an in-vehicle mode, a driving mode, a mute mode, an airplane mode, an offline mode, an outdoor mode, or a conference mode; and a display unit, configured to: trigger display of a first display interface in response to a preset gesture, and display a first icon on the first display interface, where the first icon corresponds to the first service item, where the display unit is further configured to display an interaction interface of the first service item in response to an operation performed on the first icon.

According to another aspect, an embodiment of this application provides a method for displaying a graphical user interface GUI, the method is implemented in an electronic device with a touchscreen, and the method includes: displaying, by the electronic device, a first GUI on the touchscreen in response to automatically determining a first service item in a first application based on a service item use record and/or service item use frequency of the electronic device, where a first icon is displayed on the first GUI, and the first icon corresponds to the first service item; and displaying a second GUI on the touchscreen in response to an operation performed on the first icon, where an interaction interface of the first service item is displayed on the second GUI.

According to another aspect, an embodiment of this application provides a method for displaying a graphical user interface GUI, the method is implemented in an electronic device with a touchscreen, and the method includes: displaying, by the electronic device, a first GUI on the touchscreen in response to automatically determining a first service item in a first application based on at least one of a calendar, time, or a location, where a first icon is displayed on the first GUI, and the first icon corresponds to the first service item; and displaying a second GUI on the touchscreen in response to an operation performed on the first icon, where an interaction interface of the first service item is displayed on the second GUI.

According to another aspect, an embodiment of this application provides a method for displaying a GUI, the method is implemented in an electronic device with a touchscreen, and the method includes: displaying, by the electronic device, a first GUI on the touchscreen in response to automatically determining a first service item in a first application based on a scenario mode, where a first icon is displayed on the first GUI, the first icon corresponds to the first service item, and the scenario mode includes at least one of an in-vehicle mode, a driving mode, a mute mode, an airplane mode, an offline mode, an outdoor mode, or a conference mode; and displaying a second GUI on the touchscreen in response to an operation performed on the first icon, where an interaction interface of the first service item is displayed on the second GUI.

In a possible design, the first GUI is a home screen of the electronic device, a HiBoard interface of the electronic device, or a first display interface whose display is triggered in response to a preset gesture.

In a possible design, the first GUI includes a first area, and that a first icon is displayed on the first GUI includes: the first icon corresponding to the frequently used or recently used first service item is displayed in the first area on the first GUI, where the first area is located at a bottom, a top, a lower right corner, or a lower left corner of the first GUI.

According to another aspect, an embodiment of this application provides an electronic device, including one or more processors and one or more memories, where the one or more memories are coupled to the one or more processors, the one or more memories are configured to store computer program code, the computer program code includes a computer instruction, and when the one or more processors execute the computer instruction, the electronic device performs the icon display method or the method for displaying a graphical user interface GUI in any possible design of any one of the foregoing aspects.

According to another aspect, an embodiment of this application provides a computer storage medium, including a computer instruction, where when the computer instruction runs on an electronic device, the electronic device is enabled to perform the icon display method or the method for displaying a graphical user interface GUI in any possible design of any one of the foregoing aspects.

According to another aspect, an embodiment of this application provides a computer program product, where when the computer program product runs on a computer, the computer is enabled to perform the icon display method or the method for displaying a graphical user interface GUI in any possible design of any one of the foregoing aspects.

### BRIEF DESCRIPTION OF DRAWINGS

FIG. 1(a), FIG 1(b), FIG. 1(c), FIG. 1(d), and FIG 1(e) are a schematic diagram of a process of using a service item according to an embodiment of this application;
FIG. 2(a), FIG. 2(b), FIG. 2(c), FIG. 2(d), and FIG. 2(e) are another schematic diagram of a process of using a service item according to an embodiment of this application;
FIG. 3 is a schematic structural diagram of a mobile phone according to an embodiment of this application;
FIG. 4 is a flowchart of an icon display method according to an embodiment of this application;
FIG. 5a is a schematic diagram of a display interface according to an embodiment of this application;
FIG. 5b is another schematic diagram of a display interface according to an embodiment of this application;
FIG. 6 is another schematic diagram of a display interface according to an embodiment of this application;
FIG. 7 is another schematic diagram of a display interface according to an embodiment of this application;
FIG. 8 is another schematic diagram of a display interface according to an embodiment of this application;
FIG. 9 is another schematic diagram of a display interface according to an embodiment of this application;
FIG. 10 is another schematic diagram of a display interface according to an embodiment of this application;
FIG. 11a is another schematic diagram of a display interface according to an embodiment of this application;
FIG. 11b is another schematic diagram of a display interface according to an embodiment of this application;
FIG. 12 is a schematic diagram of a preferential display area according to an embodiment of this application;
FIG. 13a is a schematic diagram of setting a preferential display area according to an embodiment of this application;
FIG. 13b is another schematic diagram of setting a preferential display area according to an embodiment of this application;
FIG. 13c is another schematic diagram of setting a preferential display area according to an embodiment of this application;
FIG. 13d is another schematic diagram of setting a preferential display area according to an embodiment of this application;
FIG. 14 is a schematic diagram of a priority display area according to an embodiment of this application;
FIG. 15 is another schematic diagram of a priority display area according to an embodiment of this application;
FIG. 16 is a flowchart of a method for displaying a GUI according to an embodiment of this application;
FIG. 17 is a schematic structural diagram of an electronic device according to an embodiment of this application;
FIG. 18 is a schematic structural diagram of a server according to an embodiment of this application;
FIG. 19 is another schematic structural diagram of a server according to an embodiment of this application; and
FIG. 20 is a schematic diagram of a network architecture of a system according to an embodiment of this application.

### DESCRIPTION OF EMBODIMENTS

A service in the embodiments of this application refers to various functions and the like that are provided in an application supported by an electronic device. For example, the service is Scan, Pay, Collect, Transfer, Didi Chuxing, Bike Sharing, Huabei, or Transactions in Alipay. For example, the service is Moments, Scan, Shake, Utilities, or Mobile Top Up in WeChat. For another example, the service is Membership Code, Shopping Cart, Tmall Supermarket, or Weitao in Taobao.

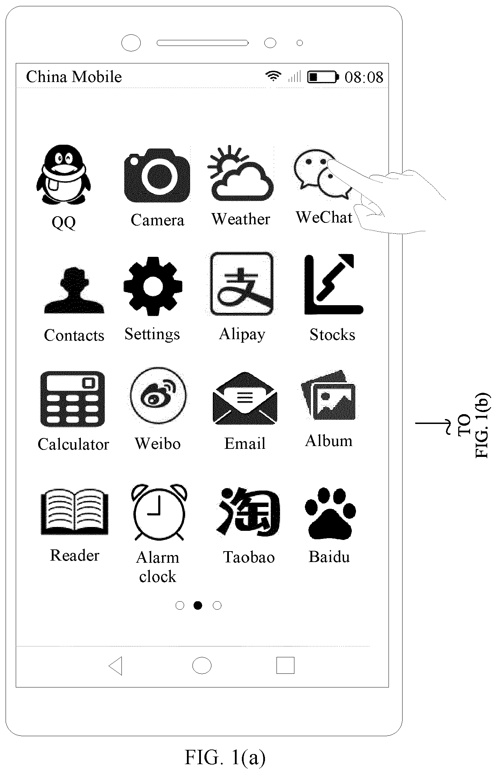

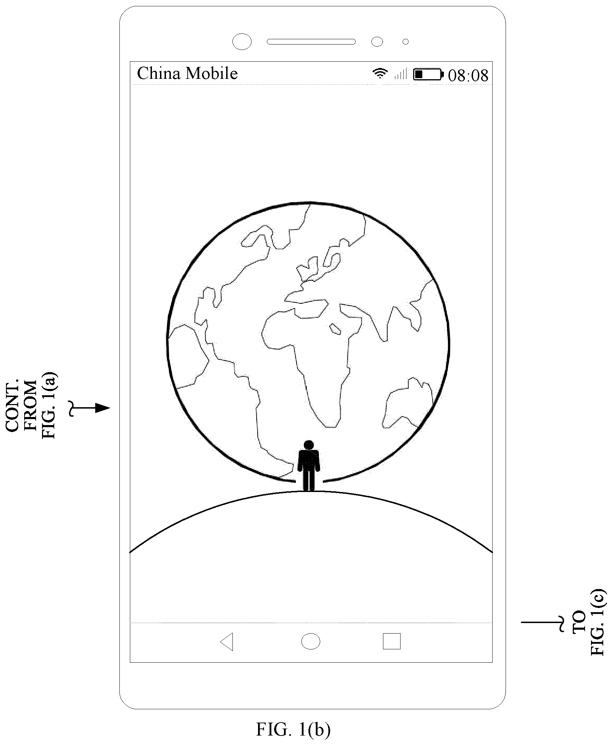

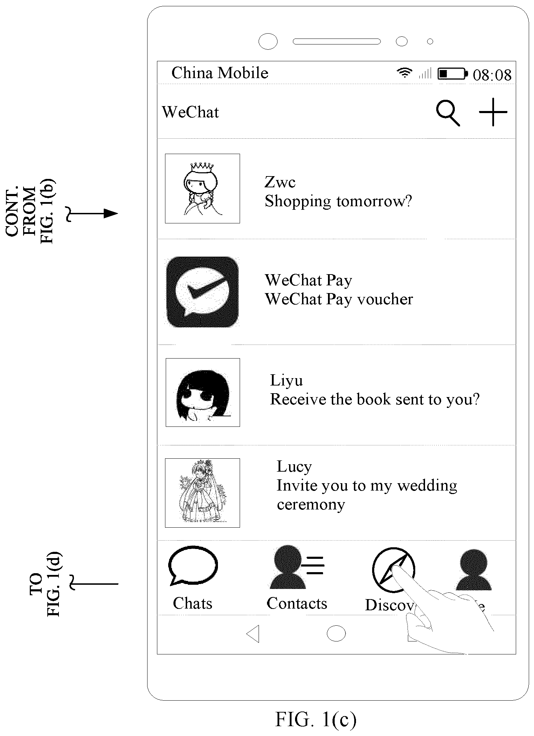

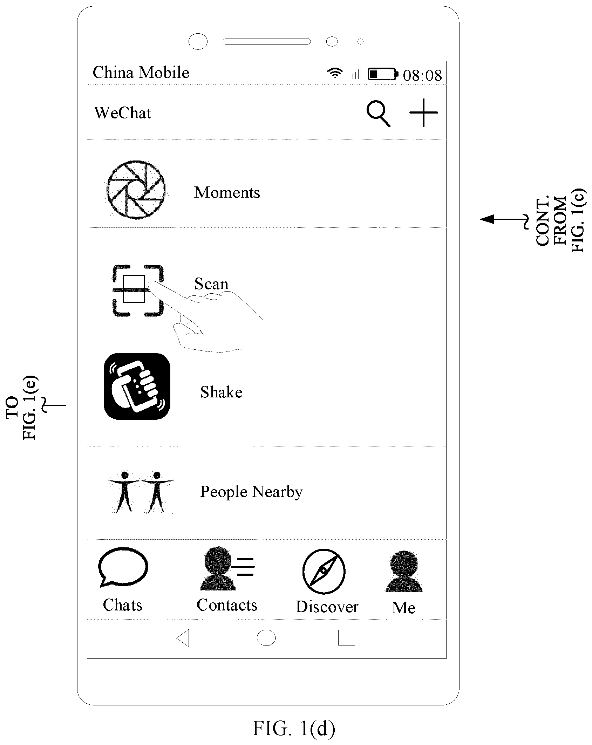

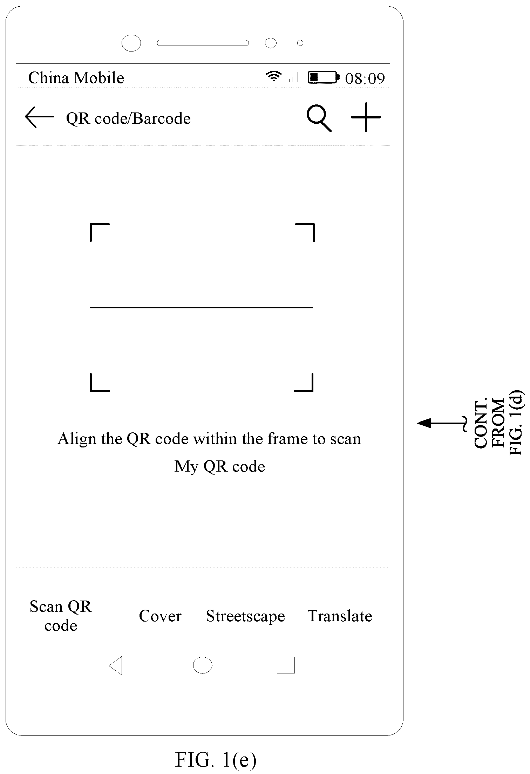

A "WeChat Scan" service is used as an example. For a schematic flowchart of using WeChat Scan each time in a conventional manner, refer to FIG. 1(a), FIG. 1(b), FIG 1(c), FIG. 1(d), and FIG. 1(e). In FIG. 1(a), a user taps a WeChat application icon on a desktop to launch a launch interface shown in FIG. 1(b). An application interface shown in FIG. 1(c) is displayed after the launch interface. "Discover" in FIG. 1(c) is tapped to enter an interface shown in FIG. 1(d). "Scan" is tapped on the interface shown in FIG. 1(d) to enable a Scan service function, and a Scan service page shown in FIG. 1(e) is entered. The desktop refers to a display area of a display screen after an electronic device is powered on.

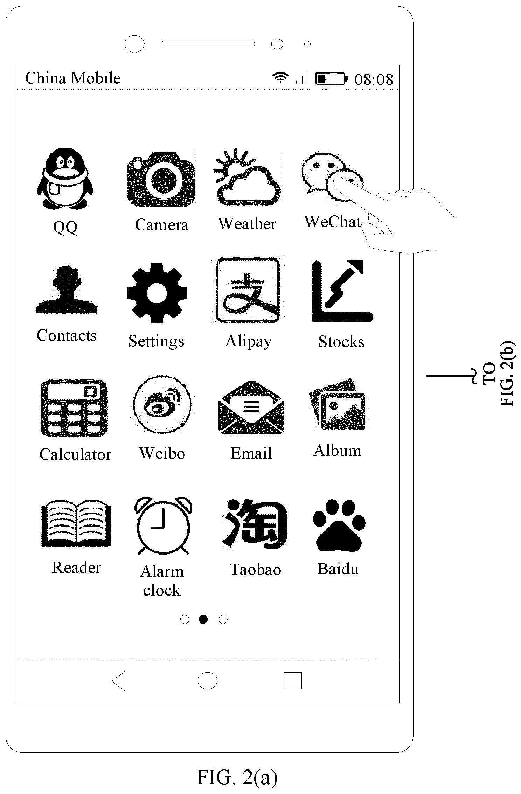

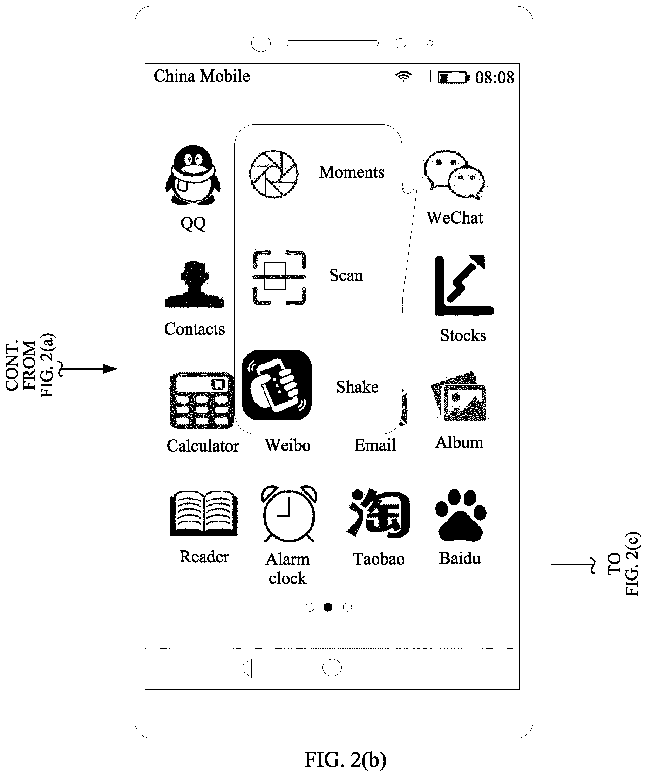

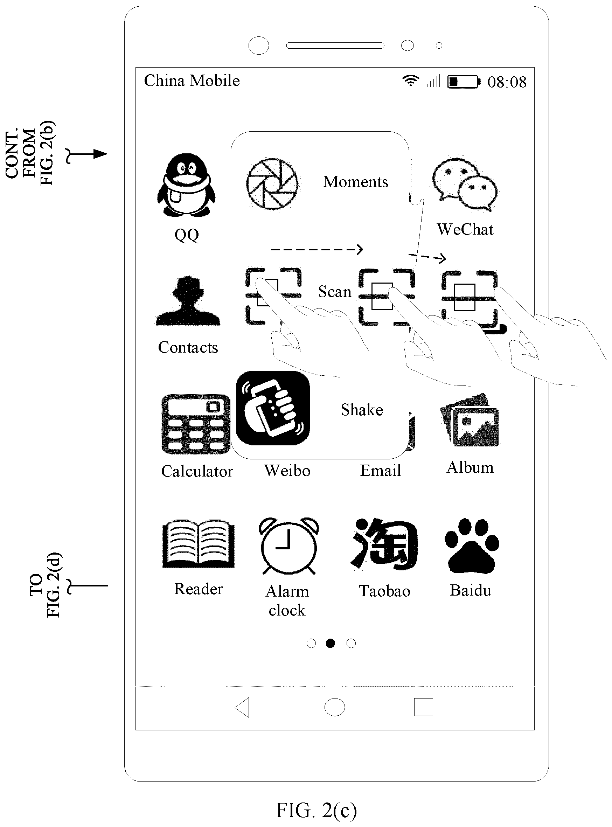

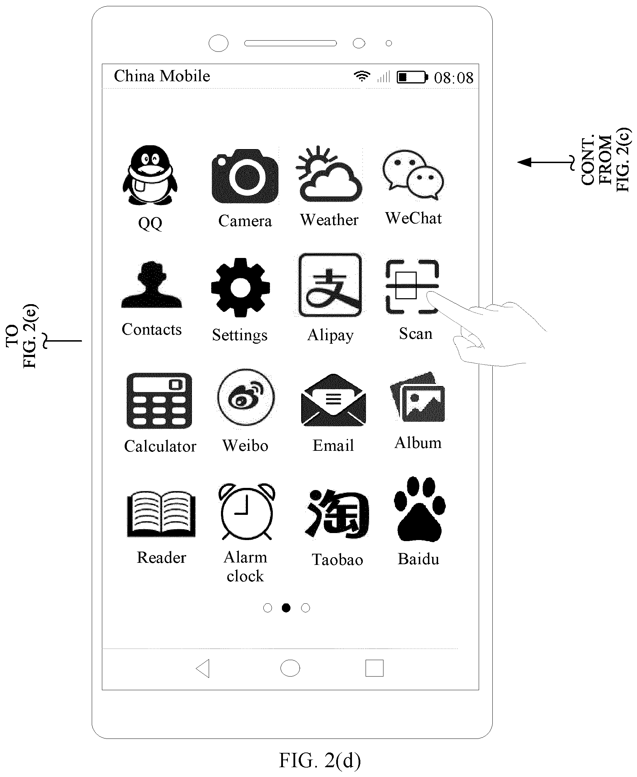

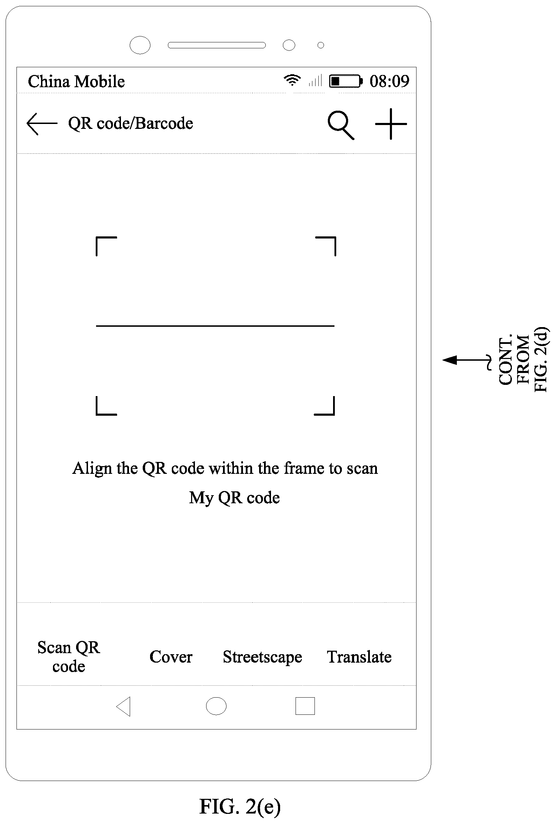

In a shortcode-based solution in the prior art, to set a service icon of WeChat Scan on a desktop, a user needs to perform operations shown in FIG. 2(a), FIG. 2(b), FIG. 2(c), FIG. 2(d), and FIG. 2(e). Specifically, referring to FIG. 2(a), the user may touch and hold a WeChat application icon. Referring to FIG. 2(b), in response to the touch and hold operation of the user, a menu list pops up on the desktop of an electronic device. Referring to FIG. 2(c), the user may drag "Scan" in the menu list to the desktop, to form the service icon of Scan shown in FIG. 2(d) on the desktop. After the service icon of Scan is formed on the desktop, the user may tap the service icon of Scan in FIG. 2(d) to launch a WeChat Scan service page shown in FIG. 2(e), and then use a WeChat Scan service.

It may be learned from a comparison between FIG. 2(a), FIG. 2(b), FIG. 2(c), FIG. 2(d), and FIG. 2(e) and FIG. 1(a), FIG. 1(b), FIG. 1(c), FIG. 1(d), and FIG 1(e) that in the shortcode-based solution, after a service icon is generated on a desktop, operation steps performed by a user to use a service can be reduced. However, during generation of the service icon, the user still needs to manually set the service icon by performing an operation such as touching and holding an application icon or dragging the service icon. Consequently, the user waits for a relatively long time, and user experience is relatively poor.

In an icon display method provided in the embodiments of this application, a service icon can be automatically displayed on a display interface of an electronic device, so that a user can directly use a service by using the service icon on a desktop, and the user does not need to manually set the service icon. Therefore, operation steps performed by the user to use a service can be reduced, a waiting time of the user can be shortened, and user experience can be improved.

The following describes the technical solutions in the embodiments of this application with reference to the accompanying drawings in the embodiments of this application. In description in the embodiments of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists. In addition, in the description in the embodiments of this application, "a plurality of" means two or more.

The icon display method provided in the embodiments of this application may be applied to any electronic device, such as a mobile phone, a tablet computer, a wearable device, an in-vehicle device, an augmented reality (augmented reality, AR)/virtual reality (virtual reality, VR) device, a notebook computer, an ultra-mobile personal computer (ultra-mobile personal computer, UMPC), a netbook, or a personal digital assistant (personal digital assistant, PDA), that can display an icon. This is not limited in the embodiments of this application.

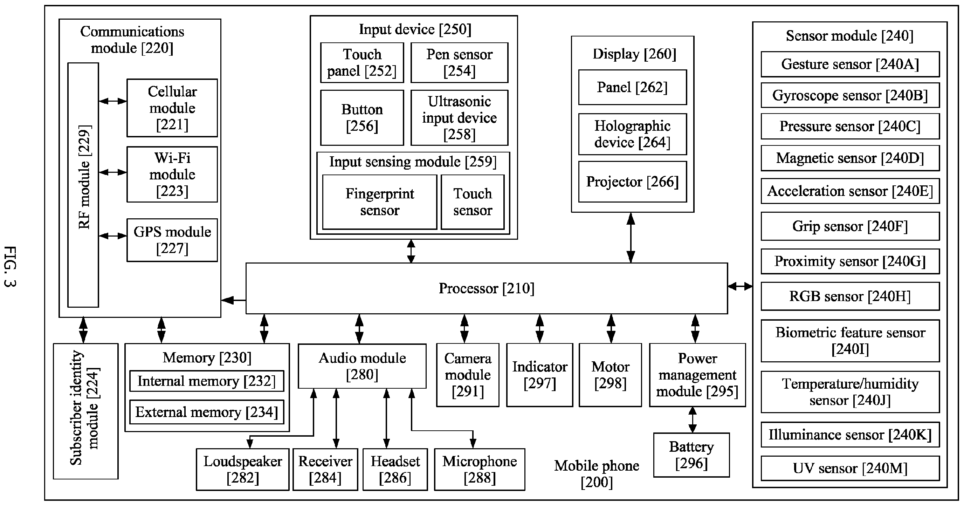

In an example, the electronic device in the embodiments of this application is a mobile phone, and a general hardware architecture of the mobile phone is described. As shown in FIG. 3, a mobile phone 200 may include a communications module 220, a memory 230, a sensor module 240, an input device 250, a display 260, an audio module 280, a processor 210, a camera module 291, a power management module 295, and the like. These components may be connected by using a bus, or may be directly connected. A person skilled in the art may understand that the structure of the mobile phone shown in FIG. 3 constitutes no limitation on the mobile phone, and the mobile phone may include more components than those shown in FIG. 3, or include a combination of some components, or have different component arrangements.

The communications module 220 is configured to communicate with another network entity, for example, receive information from a server or send related data to a server. The communications module 220 may include a radio frequency (radio frequency, RF) module 229, a cellular module 221, a wireless fidelity (wireless fidelity, WIFI) module 223, a GPS module 227, and the like. The RF module 229 may be configured to receive and send a signal in an information receiving/sending process or a call process. Particularly, the RF module 229 sends received information to the processor 210 for processing, and sends a signal generated by the processor 210. The RF circuit 21 may usually include but is not limited to an antenna, at least one amplifier, a transceiver, a coupler, a low noise amplifier (low noise amplifier, LNA), and a duplexer. In addition, the RF circuit 21 may further communicate with a network and another device through wireless communication. The cellular module 221 and the Wi-Fi module 223 may be configured to connect to a network. The GPS module may be configured to perform positioning or navigation.

The processor 210 is a control center of the mobile phone 200, is connected to all parts of the entire mobile phone by using various interfaces and lines, and executes various functions of the mobile phone 200 and performs data processing by running or executing a software program and/or a module that are/is stored in the memory 230 and by invoking data stored in the memory 230, to perform overall monitoring on the mobile phone 200. In specific implementation, in an embodiment, the processor 210 may include one or more processing units, and an application processor and a modem processor may be integrated into the processor 210. The application processor mainly processes an operating system, a graphical user interface, an application, and the like. The modem processor mainly processes wireless communication. It may be understood that alternatively, the modem processor may not be integrated into the processor 210.

The memory 230 may be configured to store data, a software program, and a module, and may be a volatile memory (volatile memory), for example, a random access memory (random-access memory, RAM), or may be a nonvolatile memory (non-volatile memory), for example, a read-only memory (read-only memory, ROM), a flash memory (flash memory), a hard disk drive (hard disk drive, HDD), or a solid-state drive (solid-state drive, SSD), or may be a combination of the foregoing types of memories. Specifically, the memory 230 may store program code. The program code is used to enable the processor 210 to perform, by executing the program code, the icon display method provided in the embodiments of this application. The memory 230 may include an internal memory 232 and an external memory 234.

The sensor module 240 may include a gesture sensor 240A, a gyroscope sensor 240B, a pressure sensor 240C, a magnetic sensor 240D, and an acceleration sensor 240E, and may be configured to detect a value of acceleration in each direction (usually, three axes) of the mobile phone, may detect a value and a direction of gravity in a static state, and may be used in an application for identifying a posture of the mobile phone (such as screen switching between a landscape mode and a portrait mode, a related game, or magnetometer posture calibration), a function related to vibration identification (such as a pedometer or a knock), and the like. It should be noted that the mobile phone 200 may further include other sensors such as a grip sensor, a proximity sensor, an RGB sensor, a biometric feature sensor, a temperature/humidity sensor, an illuminance sensor, and a UV sensor. Details are not described herein.

The input device 250 may include a touch panel 252, a pen sensor 254, a button 256, an ultrasonic input device 258, an input sensing module 259, and the like, to implement input and output functions of the mobile phone 200.

The display 260 may include devices such as a display panel 262, a holographic device 264, and a projector 266. The display panel 262 may be configured to display a graphical user interface (graphical user interface, GUI) on the mobile phone. The graphical user interface includes various application (app) icons (icon) or interaction interfaces (Activity pages) of services or functions of various applications.

Each application may correspond to a plurality of shortcuts, and each shortcut may correspond to one submenu or subservice item of the application. Icons of the plurality of shortcuts may be displayed on the display 260. In response to an operation of tapping an icon of a shortcut by a user, the mobile phone may display (enter) an activity page corresponding to the shortcut. An operating system may support two manners of configuring a shortcut: a static manner and a dynamic manner. In the static manner, a shortcut is configured by using an xml file, a parameter such as a name, an icon, a function, a classification, or availability of the shortcut is first configured, and then AndroidManiFest.xml is opened to configure a started activity. In the dynamic manner, a shortcut may be dynamically updated. For example, for the mobile phone, a shortcut may be added by using an interface setDynamicShortcuts(), a shortcut may be deleted by using an interface removeDynamicShortcuts(List) or removeAllDynamicShortcuts(), a shortcut may be updated by using an interface updateShortcuts(List), and a shortcut configured in the static manner may be further modified.

The camera module 291 is configured to collect an image, so as to take a photo, record a video, scan a two-dimensional code/barcode, or the like.

The audio module 280 may include a loudspeaker 282, a receiver 284, a headset 286, a microphone 288, or the like. The user collects or plays an audio signal.

The power management module 295 may include a battery 296, and is logically connected to the processor 210 by using a power management system, to implement functions such as charging management, discharging management, and power consumption management by using the power management system.

In addition, the mobile phone 200 may further include function modules such as a subscriber identity module, an indicator, and a motor. The function modules are not described herein.

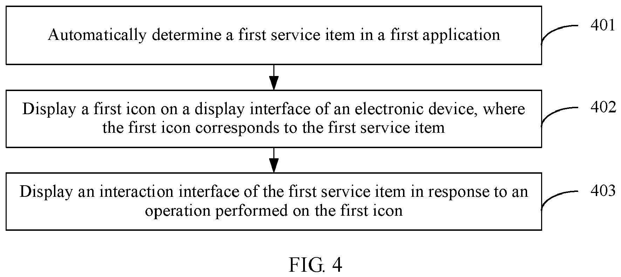

The icon display method provided in the embodiments of this application is described below in detail by using a specific embodiment. Referring to FIG. 4, the method may include the following steps.

401. An electronic device automatically determines a first service item in a first application.

The first application may be any application installed on the electronic device, and the first service item may be a submenu or a subservice item in any application. In other words, the electronic device may automatically determine any service item in any application. The first service item automatically determined by the electronic device is usually a service item that is currently more likely to be used by a user.

For example, Alipay is the first application, and the first service item may be a submenu or a subservice item such as Scan, Pocket, Didi Chuxing, Pay, Utilities, and/or Bike Sharing in the application Alipay. For example, WeChat is the first application, and the first service item may be a submenu or a subservice item such as Moments, Scan, My Posts, Favorites, Wallet, and/or Mobile Top Up in Wallet in the application WeChat.

402. The electronic device displays a first icon on a display interface of the electronic device, where the first icon corresponds to the first service item.

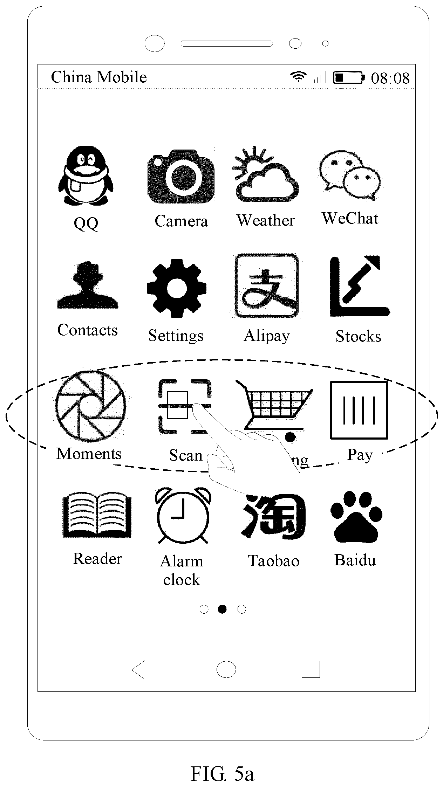

The first icon is an icon of a shortcut of the first service item. In this embodiment of this application, an icon of a shortcut of a service item is also referred to as a service icon. After determining the first service item in the first application, the electronic device may automatically display, on the display interface, the first icon corresponding to the first service item. For example, when the first service item automatically determined by the electronic device is WeChat Moments, WeChat Scan, Taobao Shopping Cart, and/or Alipay Pay, referring to an icon in a dashed line box shown in FIG. 5a, the electronic device may automatically display the icon of the first service item, for example, a service icon of WeChat Moments, a service icon of WeChat Scan, a service icon of Taobao Shopping Cart, and/or a service icon of Alipay Pay, on the display interface.

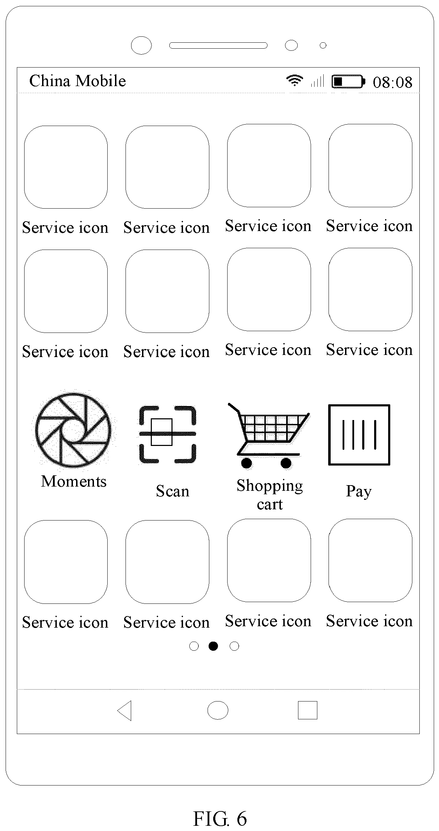

It should be noted that a display interface shown in FIG. 5a includes the service icon in the dashed line box and an application icon outside the dashed line box. The service icon and the application icon on the display interface may be presented in different forms. For example, the service icon is a circular icon, and the application icon is a rectangular icon; or an identifier S is set in an upper right corner of the service icon, and no identifier S is set in the application icon. It may be understood that referring to FIG. 6, a first interface may include only a service icon and no application icon. In other words, only the service icon is displayed on the first interface. The first interface may be a preset interface.

In addition, in this embodiment of this application, an application identifier may be further displayed on the first icon, to indicate an application from which the first service item corresponding to the first icon comes. For example, the first service item is Moments. In this case, an icon of WeChat may be displayed in a lower right corner of a service icon of Moments, to indicate that the service item of Moments comes from WeChat.

In addition, it should be further noted that in addition to an icon corresponding to a service item automatically determined by the electronic device, a service icon set by the user based on a shortcode function of the Android version O may be further displayed on the display interface of the electronic device.

403. The electronic device displays an interaction interface of the first service item in response to an operation performed on the first icon.

The first icon corresponds to the interaction interface of the first service item, and the interaction interface of the first service item is used to provide the user with a function related to the first service item. The interaction interface is an activity page corresponding to the first service item, and the activity page is an interface for interaction between a user and a program in an operating system. Alternatively, the interaction interface is a page corresponding to a uniform resource locator (uniform resource locator, URL) of the first service item.

When the user performs an operation on the first icon on the display interface, the electronic device displays the interaction interface of the first service item in response to the operation performed by the user on the first icon, and provides the user with the function related to the first service item. Specifically, in response to the operation performed by the user on the first icon, the electronic device may display the activity page corresponding to the first service item, namely, the page corresponding to the URL of the first service item.

Specifically, in response to the operation, for example, a tap operation, a double-tap operation, a touch and hold gesture operation, or a voice control operation, performed on the first icon, the electronic device may invoke, by using a function intent(), the interaction interface of the first service item corresponding to the first icon, so that the first service item is directly used by using the first icon.

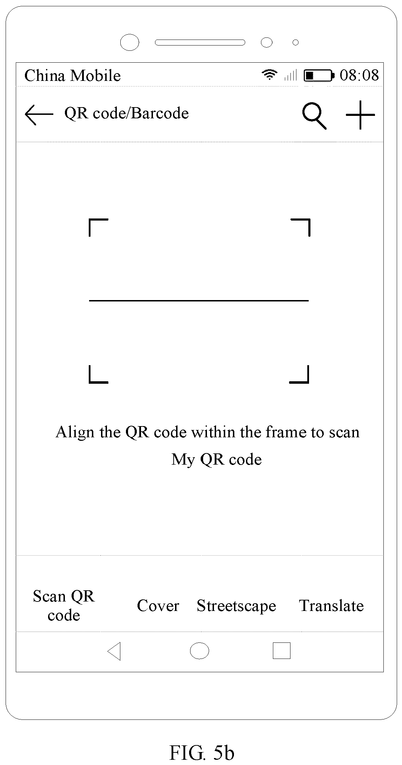

For example, when the first icon is a service icon corresponding to a WeChat Scan service item in FIG 5a, in response to a tap operation performed by the user on the service icon of Scan, referring to FIG. 5b, the electronic device displays an interaction interface of the Scan service item, to provide the user with a two-dimensional code or barcode scanning service. In comparison with the prior-art solution shown in FIG. 1(a), FIG. 1(b), FIG. 1(c), FIG. 1(d), FIG 1(e), FIG. 2(a), FIG. 2(b), FIG. 2(c), FIG. 2(d), or FIG. 2(e), in the solution provided in FIG. 5a and FIG. 5b in this embodiment of this application, the electronic device can automatically determine a service item, and automatically display a service icon corresponding to the service item, so that the user can quickly and directly use the service item by using the service icon.

In this embodiment of this application, the electronic device continuously determines the first service item, and displays the service icon corresponding to the first service item, to continuously update the service icon displayed on the display interface, so that a service icon currently displayed on the display interface matches a current status of the electronic device, thereby dynamically providing the user with a service icon of a service item that is currently more likely to be used.

It may be learned that in the icon display method provided in this embodiment of this application, the electronic device can automatically determine a service item, and automatically display, on the display interface, a service icon corresponding to the service item, so that the user can directly use the service item by using the service icon on the display interface, and the user does not need to manually set the service icon corresponding to the service item, thereby reducing operation steps performed by the user to use a service, shortening a waiting time of the user, and improving user experience.

In step 401, that an electronic device automatically determines a first service item in a first application may include that the electronic device automatically determines the first service item in the first application based on a service item use record and/or service item use frequency of the electronic device.

A service item recently used by the user is usually a service item that is recently more likely to be used by the user. Therefore, in a possible implementation, the electronic device may record a use time of each service item, determine N (positive integer) service items used in a recent time period (for example, in the last day or in the last three days), and display, on the display interface, service icons corresponding to the N service items.

A service item frequently used by the user is currently more likely to be used by the user. Therefore, in a possible implementation, the electronic device may record a quantity of use times of each service item, determine N service items with a largest quantity of use times, and display, on the display interface, service icons corresponding to the N service items. Alternatively, the electronic device may record a quantity of use times of each service item, determine use frequency (for example, a quantity of times each service item is used each day) of each service item and N service items with highest use frequency, and display, on the display screen, service icons corresponding to the N service items.

In another possible implementation, the electronic device may record a quantity of use times of each service item in a recent time period, determine N service items with a largest quantity of use times in the recent time period (for example, in the last 10 days or in the last month), and display, on the display interface, service icons corresponding to the N service items.

For example, if N (top N) service items used by the electronic device for a largest quantity of times within the last 15 days are shown in Table 1, the electronic device may display, on the display interface, service icons corresponding to the service items in Table 1.

**Table 1**

| Number | Service item | Quantity of use times (top N) |
|---|---|---|
| 1 | WeChat Moments | 60 |
| 2 | Hot News | 32 |
| 3 | Alipay Scan | 20 |
| 4 | Work in Baidu Maps | 12 |
| 5 | Voice Assistant | 10 |
| 6 | Taobao Shopping Cart | 8 |
| ... | ... | ... |
| N-1 | Bank Transfer | 6 |
| N | Alipay Utilities | 5 |

Alternatively, in step 401, that an electronic device automatically determines a first service item in a first application may include that the electronic device automatically determines the first service item in the first application based on at least one of a calendar (or a date), time, or a location.

For example, on the eve of the Double Eleven online shopping festival on November 11, the electronic device may determine a service item, such as Taobao Shopping Cart or Alipay Scan, related to online shopping, and display a corresponding service icon on the display interface, so that the user quickly participates in a rush for goods. For another example, on a holiday such as the Spring Festival or New Year's Eve, the electronic device may determine a service item such as a WeChat Red Packet service or WeChat Transfer, and display a corresponding service icon on the display interface. In a time period from 8:00 to 12:00 on the New Year's Eve, the electronic device may determine an Alipay Red Packet service item, so that the user can participate in a red packet grabbing activity in the evening of the New Year's Eve.

For example, based on a birthday of the user, a family member, or a friend, or an anniversary recorded in a calendar, when the birthday of the user, the family member, or the friend, or the anniversary arrives, the electronic device may determine a cake reservation service item and an alarm clock reminder service item, and display, on the display interface of the electronic device, icons corresponding to the determined service items.

For example, during lunchtime from 11:30 to 14:00 on a working day, the electronic device may determine a "Discover Food" service item in Baidu Maps, and display a service icon of Discover Food on the display interface, so that the user can quickly find a place for lunch based on the service icon of "Discover Food" during lunchtime. Alternatively, the electronic device may determine a delivery service item in an application such as Meituan, to help the user to order a takeaway.

For example, in a consumer place such as a shopping mall or a supermarket, the electronic device may determine WeChat Payment Code, WeChat Membership Card, Alipay Scan, or the like, and display a corresponding service icon on the display interface, so that the user can quickly check out. Near a parking lot, the electronic device may determine a "Parking Lots" service item in Baidu Maps, and display a corresponding service icon on the display interface, so that the user can quickly locate the parking lot and park.

For example, at home, the electronic device may determine some service items related to entertainment and leisure, for example, a video play service item and a mini-game service item.

For example, on a working day morning from 7:00 to 9:00, on a way from home to company, the electronic device may determine a "Work service in Baidu Maps", so that the user can view a road condition, a traffic congestion condition, and the like in real time.

Alternatively, in step 401, that an electronic device automatically determines a first service item in a first application may include that the electronic device automatically determines the first service item in the first application based on a scenario mode. The scenario mode of the electronic device may include an in-vehicle mode, a driving mode, a mute mode, an airplane mode, an offline mode, an outdoor mode, a conference mode, or the like.

For example, when the electronic device is in the in-vehicle mode or the driving mode, the electronic device may determine a "Voice Assistant" service item, and display a corresponding service icon, so that in an in-vehicle scenario, the user can operate the electronic device in a voice manner to make or answer a call, send a message, or the like.

For example, when the electronic device is in the in-vehicle mode during an off-duty time from 17:00 to 20:00, the electronic device determines a "Home service item in Baidu Maps", and displays a corresponding service icon, so that the user can view a road condition, a traffic congestion condition, and the like in real time on a way to home.

For example, when the electronic device is in the airplane mode, the electronic device cannot access a network or communicate with another device, and therefore the electronic device may determine a service item such as local music library in a music player or local book in reading software.

The scenario mode may be a mode set or selected by the user. For example, the user sets the electronic device to the mute mode. Alternatively, the scenario mode may be a mode determined by the electronic device based on a current status parameter of the electronic device. The status parameter may include one or more of a calendar, time, a location, a current network status of the electronic device, a service item currently used by the electronic device, a parameter obtained by the electronic device based on the currently used service item, and the like. For example, when the electronic device is connected to an in-vehicle call by using Bluetooth, it may be determined that a current scenario mode of the electronic device is the driving mode. Alternatively, when the electronic device is using a Work service item in Baidu Maps, and it is determined, based on a positioning function in the service item, that the electronic device moves at a relatively high speed, it may be determined that a current scenario mode of the electronic device is the driving mode.

Alternatively, the electronic device may automatically determine the first service item based on a currently used service item and/or a parameter determined based on the currently used service item.

For example, on a working day, when it is determined, based on a GPS service, that the electronic device moves at a relatively high speed, and the electronic device enables in-vehicle Bluetooth, it may be determined that the user is driving, and the electronic device may automatically determine a Home service item in Baidu Maps.

Alternatively, the electronic device may save a correspondence between each service item and one or more of a calendar, time, a location, a scenario mode, and another parameter that are obtained when the service item is used, and automatically determine the first service item based on the historically saved correspondence.

For example, when the electronic device saves a plurality of records shown in Table 2, the electronic device may determine a Voice Assistant service item and a Home service item in Baidu Maps in a time period from 7:00 to 8:00 on a working day morning, and display corresponding service icons on the display interface.

**Table 2**

| Date | Time | Used service item |
|---|---|---|
| ***, Monday | 7:00-8:00 | Voice Assistant and Work in Baidu Maps |
| ***, Tuesday | 7:30-8:25 | Work in Baidu Maps |
| ***, Friday | 7:20-8:30 | Voice Assistant |
| ... | ... | ... |
| ***, Wednesday | 7:40-9:00 | Work in Baidu Maps |

A service item frequently used by the user in a specific scenario may be referred to as a use preference of the user. A user portrait may be formed based on a correspondence between different scenarios and use preferences of the user.

Alternatively, the electronic device may automatically determine the first service item based on a current network status.

For example, when the electronic device currently accesses a Wi-Fi network, and a network status is relatively good, the electronic device may determine a video-related service item. When the electronic device accesses a network by using data traffic, or accesses a network by using Wi-Fi, and a network status is relatively poor, the electronic device may determine a non-video-related service item.

Alternatively, in step 401, the electronic device may automatically determine the first service item in the first application based on an indication of a server.

Specifically, the server may generate indication information, and send the indication information to the electronic device, to instruct the electronic device to determine the first service item and display, on the display interface, the icon corresponding to the first service item. The indication information may include an identifier of the first service item in the first application. The identifier may be a combination of a package name (package name) and a service name (service name), or the identifier may be a URL corresponding to a service item. A form of the identifier is not specifically limited in this embodiment of this application.

Before the server sends the indication information to the electronic device, the server may also determine the first service item in a manner similar to the manner of determining the first service item by the electronic device, and then generate, based on the determined first service item, the indication information that includes the identifier of the first service item.

For example, the server may determine the first service item based on at least one of a calendar, time, or a location.

In addition, a difference from determining the first service item by the electronic device lies in that the server may require the electronic device to report related behavior information, and then determine the first service item based on the related behavior information of the electronic device.

For example, the server may receive a service item use record and/or service item use frequency that are/is reported by the electronic device, and then determine the first service item based on the service item use record and/or the service item use frequency of the electronic device.

For example, the server may receive a scenario mode reported by the electronic device, and then determine the first service item based on the scenario mode of the electronic device.

For another example, the server may receive a currently used service item and/or a parameter determined based on the currently used service item that are/is reported by the electronic device, and then determine the first service item based on the service item currently used by the electronic device and/or the parameter determined based on the currently used service item.

For another example, the server may receive a correspondence that is between a service item and one or more of a calendar, time, a location, a scenario mode, and another parameter that are obtained when the service item is used and that is reported by the electronic device, and then determine the first service item based on the correspondence.

For another example, the server may receive a current network status reported by the electronic device, and automatically determine the first service item based on the current network status of the electronic device.

In addition, the server may receive a service icon that is reported by the electronic device and that is of a service item set by the user on the display interface of the electronic device based on a shortcode function, and then determine the first service item based on a service item recently set by the user or a recently used service item set based on a shortcode function.

In addition, the server may receive service item use records and/or service item use frequency reported by a plurality of other electronic devices, and then determine the first service item based on service items, in big data, that are recently used or most frequently used by the plurality of electronic devices. For example, when identifiers of N services that are collected by the server and that are recently (for example, in the last week or the last month) most frequently used by a plurality (for example, thousands or tens of thousands) of electronic devices include identifiers of services such as Local Weather, Hot News, and WeChat Scan, the server may indicate the identifiers of the service items such as Local Weather, Hot News, and WeChat Scan to the electronic device.

Alternatively, the electronic device flexibly determines the first service item in the first application by using a combination of the plurality of manners of determining the first service item.

In some embodiments of this application, the display interface in step 402 may be a home screen of the electronic device, and may also be referred to as a home page, a home screen, or the like. The home screen is usually automatically displayed after the electronic device is powered on, in other words, the user can immediately see the home screen after the electronic device is powered on. In addition, the home screen is displayed by default by the electronic device after a home button is pressed. Therefore, the home screen can be directly, conveniently, and quickly found. When the display interface is the home screen of the electronic device, the electronic device may automatically display, on the home screen, a service icon corresponding to a service item. Because the home screen can be conveniently and quickly located, the service icon on the home screen can also be conveniently and quickly found by the user. Therefore, a time of searching for and finding the service icon by the user is shortened, a service is quickly and directly used, and user experience is improved. For example, when the display interface is the home screen, the display interface may be an interface shown in FIG 5a.

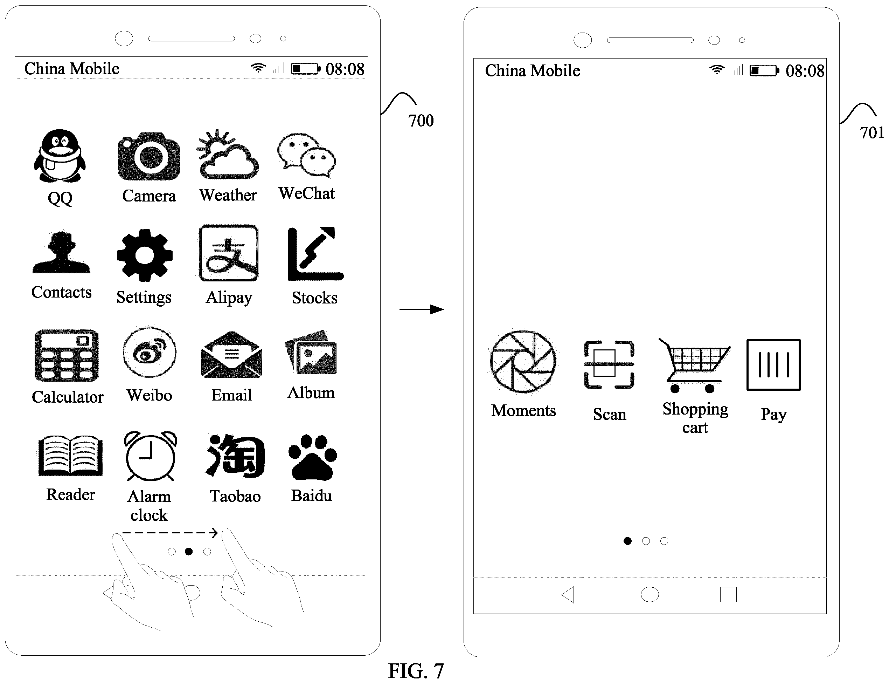

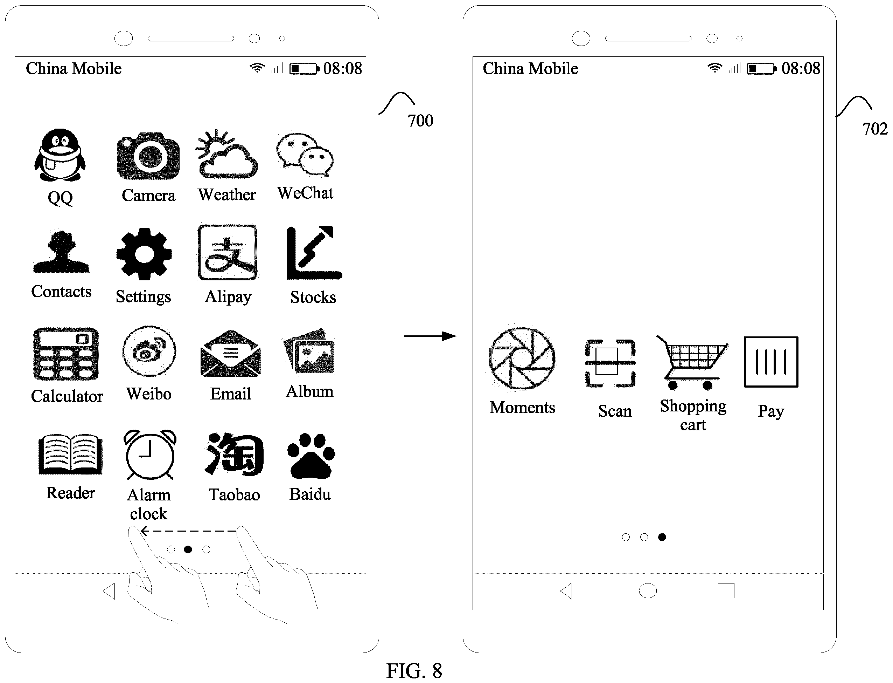

In some other embodiments, the display interface in step 402 may be another interface on a desktop of the electronic device. For example, the display interface may be an interface entered after rightward sliding is performed from a home screen of the electronic device, and may also be referred to as "HiBoard", or "a HiBoard menu". For example, when the home screen is an interface 700 shown in FIG. 1(a), for a display interface 701, refer to FIG. 7. Alternatively, the display interface may be an interface displayed after leftward sliding is performed from a home screen of the electronic device. For example, when the home screen is an interface 700 shown in FIG. 1(a), for a display interface 702, refer to FIG. 8. A specific interface that the display interface is is not limited in this embodiment of this application. When the display interface is the interface displayed after leftward sliding is performed from the home screen of the electronic device or the interface displayed after rightward sliding is performed from the home screen of the electronic device, because the home screen can be conveniently and quickly located, the interface displayed after leftward sliding is performed from the home screen or the interface displayed after rightward sliding is performed from the home screen can also be quickly located. In this way, the service icon on the display interface can be quickly found by the user, and therefore a time of searching for the service icon by the user can be shortened, a service can be conveniently and quickly used, and user experience can be improved.

The HiBoard menu may refer to an interface entered after the user performs rightward sliding from the desktop (or the home screen). A function commonly used by the user, an application, a subscribed service, information, and the like may be displayed on the interface. The HiBoard menu is also referred to as a desktop assistant, a shortcut menu, or the like.

In some other embodiments, when the electronic device currently displays any page, the display interface in step 402 may be a first display interface whose display is triggered by the electronic device in response to a preset gesture operation of the user. The first display interface is used to display the first icon corresponding to the first service item.

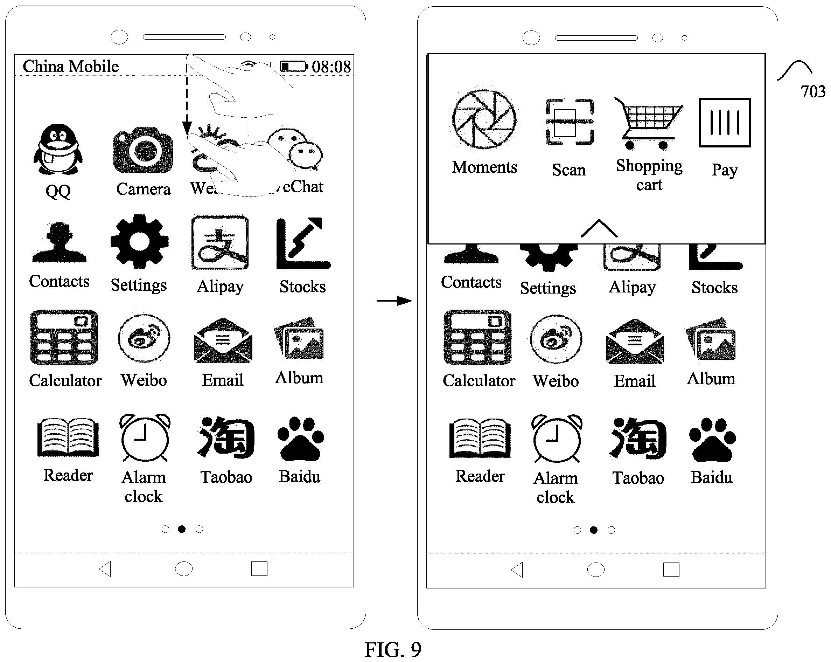

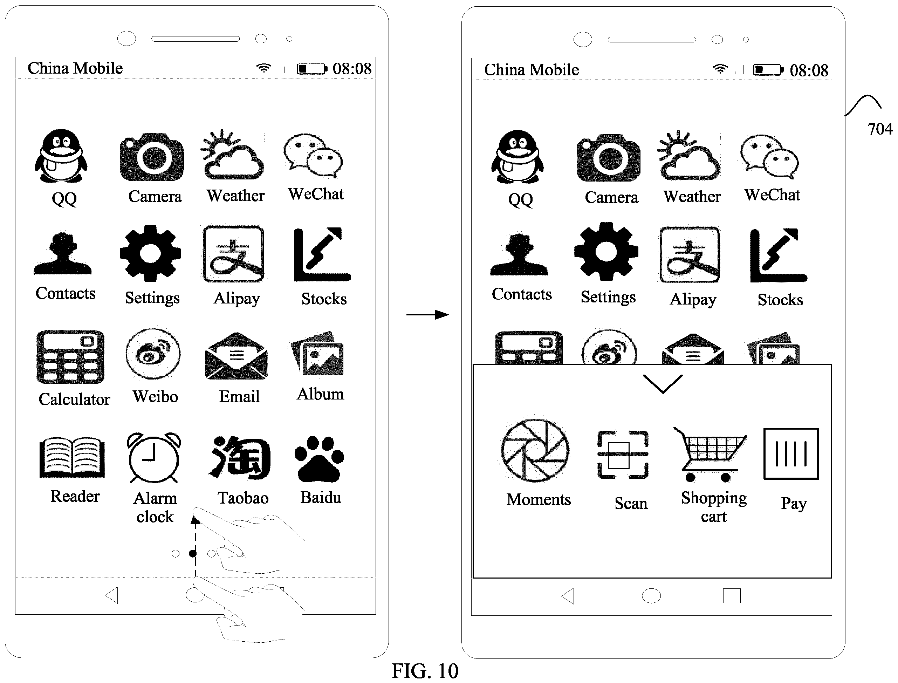

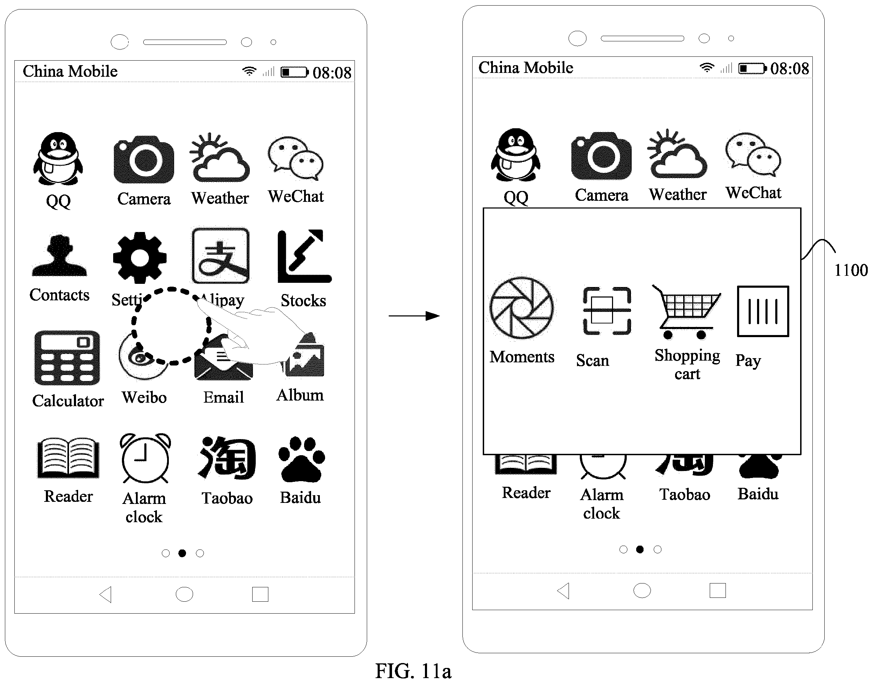

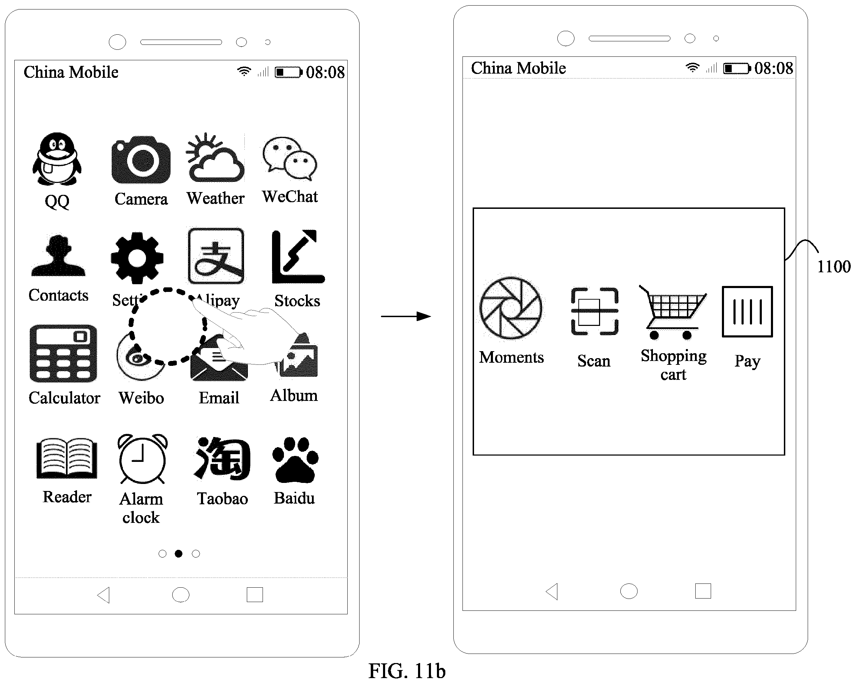

For example, when the electronic device displays a home screen shown in the first picture in FIG. 9, the first display interface may be a first display interface 703 that is shown in FIG. 9 and that is displayed on a top of a display screen in response to a preset gesture (for example, a pull-down gesture or a downward sliding gesture) at the top of the screen of the electronic device. Alternatively, the first display interface may be a first display interface 704 that is shown in FIG. 10 and that is displayed by the electronic device at a bottom of a display screen in response to a preset gesture (for example, a pull-up gesture or an upward sliding gesture) of the user at the bottom of the screen of the electronic device. Alternatively, referring to FIG. 11a and FIG. 11b, the first display interface may be a first display interface 1100 displayed by the electronic device in a middle part of a display screen in response to a preset gesture (for example, a gesture of drawing a circle by the user on the screen or a sliding gesture of three fingers) of the user.

In the case shown in FIG. 9, FIG. 10, FIG. 11a, or FIG. 11b, when any interface is displayed, the user can quickly launch, by using a preset gesture, a display interface on which a service icon is displayed, and therefore can conveniently and quickly access an interaction interface of a service item by using the service icon.

Different manners of automatically determining the first service item in step 401 and different forms of the display interface in step 402 may be separately combined.

For example, in some embodiments, the electronic device automatically determines the first service item in the first application based on the service item use record and/or the service item use frequency of the electronic device, and displays the first icon on the home screen of the electronic device. The first icon corresponds to the first service item.

In some other embodiments, the electronic device automatically determines the first service item in the first application based on the at least one of the calendar, the time, or the location, and displays the first icon on the home screen of the electronic device. The first icon corresponds to the first service item.

In some other embodiments, the electronic device automatically determines the first service item in the first application based on the scenario mode, and displays the first icon on the home screen of the electronic device. The first icon corresponds to the first service item.

In some other embodiments, the electronic device automatically determines the first service item in the first application based on the indication of the server, and displays the first icon on the home screen of the electronic device. The first icon corresponds to the first service item.

In some other embodiments, the electronic device automatically determines the first service item in the first application based on the service item use record and/or the service item use frequency of the electronic device, and displays the first icon on the HiBoard interface of the electronic device. The first icon corresponds to the first service item.

In some other embodiments, the electronic device automatically determines the first service item in the first application based on the at least one of the calendar, the time, or the location, and displays the first icon on the HiBoard interface of the electronic device. The first icon corresponds to the first service item.

In some other embodiments, the electronic device automatically determines the first service item in the first application based on the scenario mode, and displays the first icon on the HiBoard interface of the electronic device. The first icon corresponds to the first service item.

In some other embodiments, the electronic device automatically determines the first service item in the first application based on the indication of the server, and displays the first icon on the HiBoard interface of the electronic device. The first icon corresponds to the first service item.

In some other embodiments, the electronic device automatically determines the first service item in the first application based on the service item use record and/or the service item use frequency of the electronic device, triggers display of the first display interface in response to the preset gesture, and displays the first icon on the first display interface. The first icon corresponds to the first service item.

In some other embodiments, the electronic device automatically determines the first service item in the first application based on the at least one of the calendar, the time, or the location, triggers display of the first display interface in response to the preset gesture, and displays the first icon on the first display interface. The first icon corresponds to the first service item.

In some other embodiments, the electronic device automatically determines the first service item in the first application based on the scenario mode, triggers display of the first display interface in response to the preset gesture, and displays the first icon on the first display interface. The first icon corresponds to the first service item.

In some other embodiments, the electronic device automatically determines the first service item in the first application based on the indication of the server, triggers display of the first display interface in response to the preset gesture, and displays the first icon on the first display interface. The first icon corresponds to the first service item.

In step 403, that the electronic device displays a first icon on a display interface may include that the electronic device displays the first icon on the display interface of the electronic device based on use frequency or a last use time of the first service item. The display interface may be the home screen of the electronic device, the HiBoard interface of the electronic device, the first display interface whose display is triggered in response to the preset gesture, the interface displayed after leftward sliding is performed from the home screen of the electronic device, or the like.

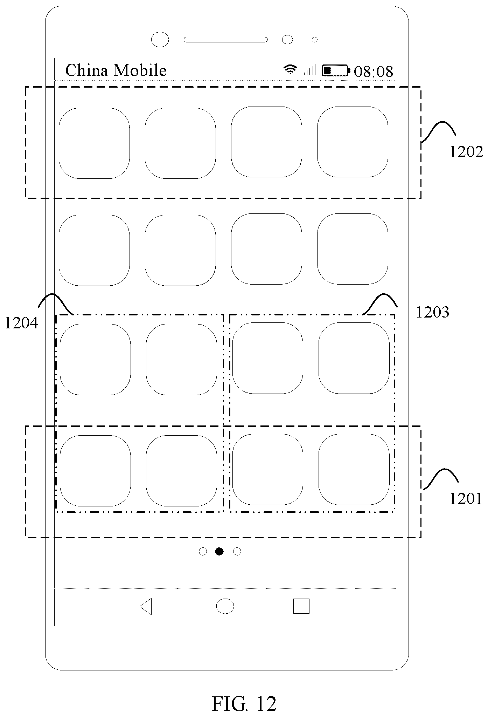

Specifically, the electronic device may display different service items at different locations on the display interface based on use frequency or last use times of the different service items. The display interface may include a first area and a second area. The first area may be referred to as a preferential display area. The electronic device may set a service item with high use frequency or a service item whose last use time is closer to a current moment (namely, a recently used service item) in the preferential display area. The preferential display area is an area that can be quickly located by the user. For example, the preferential display area may be specifically a prominent area or an area that can be intuitively viewed by the user. For example, referring to FIG. 12, the preferential display area may be an area 1201 that is at a bottom of the display interface and that is used to display the last row of icons, an area 1202 that is at a top of the display interface and that is used to display the first row of icons, or an area that is on the display interface and that is used to display the middle row of icons. Alternatively, the preferential display area may be specifically an area that is on the display interface and that is easy for the user to touch. For example, the preferential display area may be an area 1203 that is at a lower right corner of the display interface and that is easy for a thumb of a right hand to touch (which is suitable for a user who is used to using a right hand) or an area 1204 that is at a lower left corner of the display interface and that is easy for a thumb of a left hand to touch (which is suitable for a user who is used to using a left hand).

For example, quantities of use times of service items in the last 15 days are shown in Table 1. In this case, a large quantity of use times of a service item indicates higher use frequency of the service item and a higher possibility of reusing the service item by the user. If the preferential display area is the area 1203, the electronic device may display, in the preferential display area on the display interface, service icons of service items, namely, "WeChat Moments, Hot News, Alipay Scan, and Work in Baidu Maps", with highest use frequency, and display, in another area on the display interface, a service icon of another service item determined by the electronic device, for example, service icons of "Voice Assistant, Taobao Shopping Cart, ..., Bank Transfer, and Alipay Utilities" in Table 1.

For example, if it is 11:00 on August 8, and a correspondence between a service item and a last use time is shown in Table 3, there is a higher possibility that the user recently reuses service items such as "Bank Transfer, WeChat Moments, Hot News, and Voice Assistant". If the preferential display area is the area 1201, the electronic device may display, in the preferential display area on the display interface, service icons of recently used service items, namely, "Bank Transfer, WeChat Moments, Hot News, and Voice Assistant", and display, in another area on the display interface, a service icon of another service item determined by the electronic device, for example, service icons of "Work in Baidu Maps, Alipay Scan, ..., and Alipay Utilities" in Table 3.

**Table 3**

| Service item | Last use time |
|---|---|
| WeChat Moments | 8:30 on August 8 |
| Hot News | 8:45 on August 8 |
| Alipay Scan | 12:30 on August 7 |
| Work in Baidu Maps | 8:00 on August 8 |
| Voice Assistant | 8:15 on August 8 |
| Taobao Shopping Cart | 19:30 on August 5 |
| ... | ... |
| Bank Transfer | 10:30 on August 8 |
| Alipay Utilities | 20:35 on August 6 |

Alternatively, in step 403, that the electronic device displays a first icon on a display interface may include that the electronic device displays the first icon on the display interface of the electronic device based on a priority of the first service item.

Specifically, the electronic device may display a service icon of a service item with a relatively high priority in a preferential display area on the display interface, and display a service icon of a service item with a relatively low priority in another area on the display interface. A service item with a higher priority is usually a service item that is more likely to be used by the user.

In this way, the electronic device may preferentially display the service item with the higher priority in the preferential display area on the display interface, so that a service icon of a service item that is more likely to be used is provided more accurately for the user. Therefore, the user can conveniently and quickly locate, in the preferential display area on the display interface, the service icon corresponding to the service item with the higher priority, and can conveniently and quickly use the service item with the higher priority.

In an existing solution that is based on a shortcode function, when a relatively large quantity of service icons are set on a desktop, a user needs to spend a large amount of time in searching for a to-be-used service icon on the desktop page by page, row by row, and icon by icon. Consequently, user experience is poor.

In a possible implementation, a service item with high use frequency has a higher priority than a service item with low use frequency; or a service item whose last use time is closer to a current moment has a higher priority than a service item whose last use time is close to the current moment. This implementation is consistent with the described case in which the electronic device sets the service item with the high use frequency or the service item whose last use time is closer to the current moment in the preferential display area. Details are not described herein again.

In another possible implementation, the priority of the first service item varies with the manner of determining the first service item. To be specific, a higher priority of a manner of determining a service item indicates a higher priority of the service item.

For example, a service item determined by the electronic device itself has a higher priority than a service item determined by the electronic device based on the indication of the server. For example, referring to Table 4, if the preferential display area is the area 1201 in FIG. 12, the electronic device may display, in the area 1201, service icons of service items, namely, Moments, WeChat Scan, Voice Assistant, and Work in Baidu Maps, determined by the electronic device, and display, in an area outside the area 1201, service icons of service items, namely, Taobao Shopping Cart, and Alipay Pay, determined by the electronic device based on the indication of the server.

**Table 4**

| Service item | Determining manner |
|---|---|
| WeChat Moments | Determined by the electronic device itself |
| WeChat Scan | Determined by the electronic device itself |
| Work in Baidu Maps | Determined by the electronic device itself |
| Voice Assistant | Determined by the electronic device itself |
| Taobao Shopping Cart | Determined based on the indication of the server |
| ... | ... |
| Alipay Pay | Determined based on the indication of the server |

For another example, the electronic device/the server may determine a service item in the following manners: In a manner 1, the electronic device/the server determines a service item based on a service item use record and/or service item use frequency of the electronic device. In a manner 2, the electronic device/the server determines a service item based on at least one of a calendar, time, or a location. In a manner 3, the electronic device/the server determines a service item based on a scenario mode. In a manner 4, the electronic device/the server determines a service item based on a currently used service item and/or a parameter determined based on the currently used service item. In a manner 5, the electronic device/the server determines a service item based on a saved correspondence between a service item and one or more of a calendar, time, a location, a scenario mode, and another parameter that are obtained when the service item is used. In a manner 6, the electronic device/the server may determine a service item based on a current network status. In addition, the server may determine a service item in the following manners: In a manner 7, the server determines the first service item based on a service item recently set by the user or a recently used service item set based on a shortcode. In a manner 8, the server determines a service item based on collected service items, in big data, that are recently used or most frequently used by a plurality of electronic device. Priorities of different determining manners may be set based on an actual condition. In addition, when indicating a service item to the electronic device, the server may further indicate a determining manner corresponding to the service item, or indicate a priority of a determining manner corresponding to the service item, so that the electronic device can display the service item based on the priority corresponding to the determining manner of the service item.

When there is only the manner of determining a service item by the electronic device itself (the manner of determining a service item by the electronic device based on the indication of the server is not included), in a possible implementation, a descending order of priorities of the determining manners is the manner 1 to the manner 6. In other words, a service item determined in the manner 1 has a higher priority than a service item determined in the manner 2, the service item determined in the manner 2 has a higher priority than a service item determined in the manner 3, and so on.

When there is only the manner of determining a service item by the electronic device itself (the manner of determining a service item by the electronic device based on the indication of the server is not included), in a possible implementation, the manner 1 has a higher priority than another manner. In other words, a service item determined in the manner 1 has a higher priority than a service item determined in the another manner.

For example, when a correspondence between a service item and a determining manner is shown in Table 5, and the preferential display area is the area 1201 in FIG. 12, the electronic device may display, in the area 1201, service icons of service items, namely, WeChat Moments, WeChat Scan, Voice Assistant, and Work in Baidu Maps, determined in the manner 1, and display, in an area outside the area 1201, service icons of service items, namely, Taobao Shopping Cart and Alipay Pay, determined in other manners.

**Table 5**

| Service item | Determining manner |
|---|---|
| WeChat Moments | Manner 1 |
| WeChat Scan | Manner 1 |
| Work in Baidu Maps | Manner 1 |
| Voice Assistant | Manner 1 |
| Taobao Shopping Cart | Manner 4 |
| ... | ... |
| Alipay Pay | Manner 5 |

When there is only the manner of determining a service item by the electronic device itself (the manner of determining a service item by the electronic device based on the indication of the server is not included), and the manner 1, the manner 4, and the manner 6 are specifically included, in a possible implementation, referring to Table 6, a descending order of priorities of the determining manners is the manner 6 to the manner 4 to the manner 1.

**Table 6**

| Determining manner | Priority |
|---|---|
| Manner 6 | Priority 1 |
| Manner 4 | Priority 2 |
| Manner 1 | Priority 3 |

When there is only the manner of determining a service item by the electronic device based on the indication of the server, in a possible implementation, a descending order of priorities of the determining manners is the manner 1 to the manner 8. In other words, a service item determined in the manner 1 has a higher priority than a service item determined in the manner 2, the service item determined in the manner 2 has a higher priority than a service item determined in the manner 3, and so on.

When there are the manner of determining a service item by the electronic device itself and the manner of determining a service item by the electronic device based on the indication of the server, in a possible implementation, a service item determined by the electronic device itself has a higher priority than a service item determined by the electronic device based on the indication of the server. A priority order of the specific determining manners corresponding to the manner of determining a service item by the electronic device itself is the manner 1 to the manner 6; and a priority order of the specific determining manners corresponding to the manner of determining a service item by the electronic device based on the indication of the server is the manner 1 to the manner 8.

When there are the manner of determining a service item by the electronic device itself and the manner of determining a service item by the electronic device based on the indication of the server, in another possible implementation, regardless of the manner of determining a service item by the electronic device itself or the manner of determining a service item by the electronic device based on the indication of the server, a priority order corresponding to the specific determining manners is the manner 1 to the manner 8.

It should be noted that the foregoing priority order of the determining manners is merely an example for description, and there may be other priority orders based on actual requirements. The other priority orders are not described one by one in this embodiment of this application.

In this embodiment of this application, the electronic device may preferentially display a service item with a highest priority in the preferential display area based on a priority of a service item. When there are insufficient service items with the highest priority to fill the preferential display area, the electronic device may further display a service item with a second highest priority in the preferential display area, and so on.

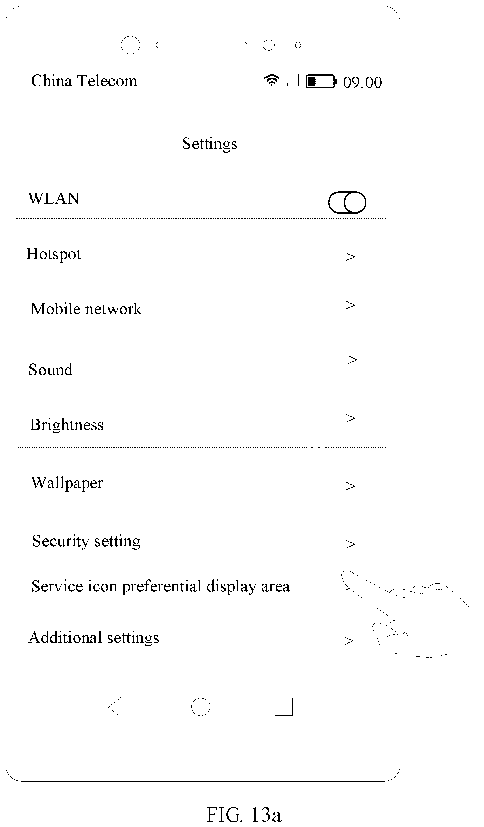

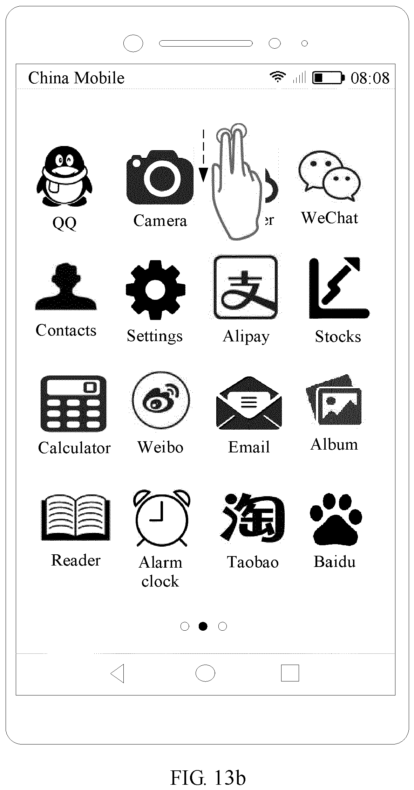

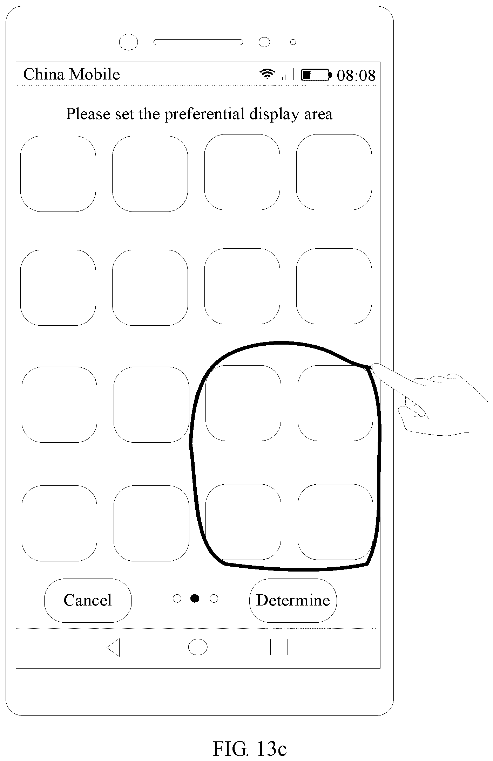

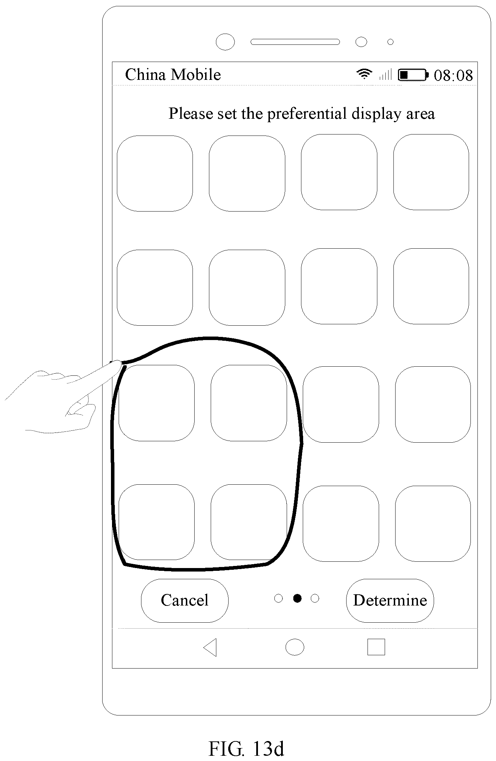

The preferential display area may be a preset area, or may be an area that is set or modified by the user based on a habit or a preference of the user. For example, referring to FIG. 13a, the user chooses to set a service icon display area. Alternatively, referring to FIG. 13b, the electronic device detects, on the desktop, a preset gesture (for example, sliding of two fingers) of the user that is used to instruct to set the preferential display area. Referring to FIG. 13c or FIG 13d, the user sets a location and a range of the preferential display area, and after the user sets the preferential display area, the electronic device may save the preferential display area, and complete setting of the preferential display area when the user selects a Determine button. As shown in FIG 13c, for a user who is used to using a right hand, the user may set, as the preferential display area, an area that is at a lower right corner and that is easy for a thumb of the right hand to touch. As shown in FIG. 13d, for a user who is used to using a left hand, the user may set, as the preferential display area, an area that is at a lower left corner and that is easy for a thumb of the left hand to touch.

Further, in the method provided in this embodiment of this application, when there are two service item priorities, each priority may correspond to one priority display area, and each priority display area is used to display a service icon of a service item corresponding to the current priority.

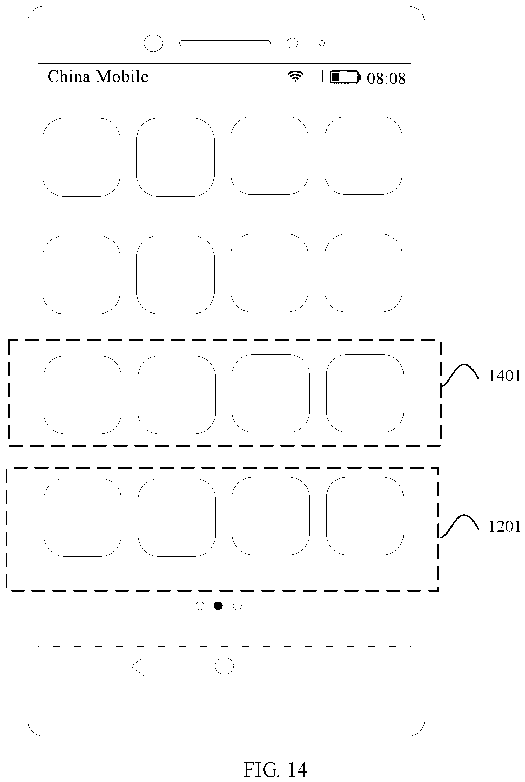

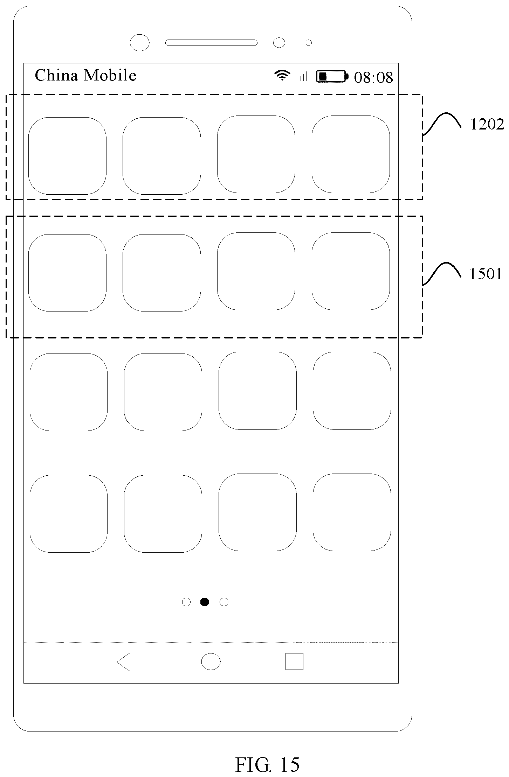

For example, when there are three priorities, the display interface may include three parts: a first priority display area, a second priority display area, and another area. The first priority display area may be the foregoing preferential display area, and the second priority display area may be a preset area or may be an area set by the user. For example, when the first priority display area is the area 1201, the second priority display area may be an area 1401 shown in FIG. 14; or when the first priority display area is the area 1202, the second priority display area may be an area 1501 shown in FIG. 15.

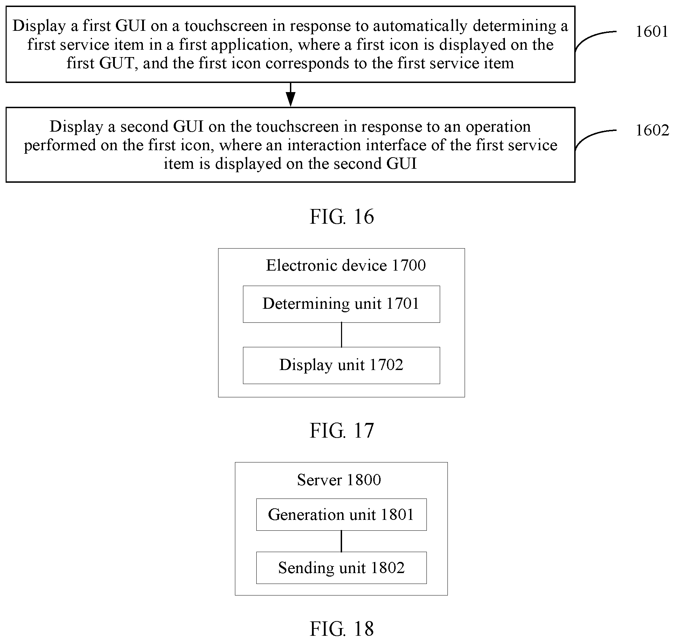

Another embodiment of this application provides a method for displaying a graphical user interface GUI. The method is implemented in an electronic device with a touchscreen. Referring to FIG. 16, the method may include the following steps:
1601. The electronic device displays a first GUI on the touchscreen in response to automatically determining a first service item in a first application, where a first icon is displayed on the first GUT, and the first icon corresponds to the first service item.

For example, the first GUI may be a home screen shown in FIG. 5a, an interface shown in the second picture in FIG. 6 or FIG. 7 to FIG. 10, or an interface shown in the second picture in FIG. 11a or FIG. 11b.

1602. The electronic device displays a second GUI on the touchscreen in response to an operation performed on the first icon, where an interaction interface of the first service item is displayed on the second GUI.

For example, when the first icon is a service icon corresponding to a WeChat Scan service item shown in FIG 5a, the second GUI may be shown in FIG. 5b.

Specifically, the electronic device may automatically determine the first service item in the first application in the manner described above. For example, the electronic device may automatically determine the first service item in the first application based on a service item use record and/or service item use frequency of the electronic device. Alternatively, the electronic device may automatically determine the first service item in the first application based on at least one of a calendar, time, or a location. Alternatively, the electronic device may automatically determine the first service item in the first application based on a scenario mode. Alternatively, the electronic device may automatically determine the first service item in the first application based on an indication of a server.

The first GUI may be a home screen of the electronic device, a HiBoard interface of the electronic device, a first display interface whose display is triggered in response to a preset gesture, an interface displayed after leftward sliding is performed from a home screen of the electronic device, or the like.

In addition, the first GUI may further include a first area. The first area may be referred to as a preferential display area, and the first icon corresponding to the first service item with a high priority is displayed in the first area on the first GUI. For a priority of a service item, refer to the foregoing related description. For example, a frequently used or recently used service item has a high priority.

In some embodiments, the first icon corresponding to the frequently used or recently used first service item is displayed in the first area on the first GUI. The first area is located at a bottom, a top, a lower right corner, or a lower left corner of the first GUI.

It may be understood that to implement the foregoing functions, each network element such as the electronic device or the server includes corresponding hardware structures and/or software modules for executing the functions. A person skilled in the art should easily be aware that in combination with the examples described in the embodiments disclosed in this specification, algorithms steps may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In the embodiments of this application, the electronic device or the server may be divided into function modules based on the foregoing method example. For example, each function module may be obtained through division based on a corresponding function, or two or more functions may be integrated into one processing module. The integrated module may be implemented in a form of hardware, or may be implemented in a form of a software function module. It should be noted that in the embodiments of this application, module division is an example, and is merely logical function division. In actual implementation, another division manner may be used.

When each function module is obtained through division based on a corresponding function, FIG. 11 is a possible schematic diagram of composition of an electronic device in the foregoing embodiment. As shown in FIG. 17, the electronic device 1700 may include a determining unit 1701 and a display unit 1702.

The determining unit 1701 may be configured to support the electronic device 1700 in performing step 401 in the icon display method shown in FIG. 4. In a possible implementation, the display unit 1702 includes a first display unit and a second display unit. The first display unit may be configured to support the electronic device 1700 in performing step 402 in the icon display method shown in FIG. 4, and the second display unit may be configured to support the electronic device 1700 in performing step 403 in the icon display method shown in FIG. 4. In another possible implementation, the first display unit and the second display unit are a same display unit, and the display unit may support the electronic device in executing functions of the first display unit and the second display unit.

Specifically, the determining unit 1701 may be configured to support the electronic device 1700 in automatically determining a first service item in a first application based on a service item use record and/or service item use frequency of the electronic device, at least one of a calendar, time, or a location, a scenario mode, or an indication of a server, and/or performing another process of the technology described in this specification.

The display unit 1702 may be configured to support the electronic device 1700 in displaying a first icon on a home screen of the electronic device, displaying a first icon on a HiBoard interface of the electronic device, displaying a first icon on an interface displayed after leftward sliding is performed from a home screen of the electronic device, or displaying a first icon on a first display interface whose display is triggered in response to a preset gesture.

In addition, the display unit 1702 may be further configured to support the electronic device 1700 in displaying, in a first area on the home screen of the electronic device, in a first area on the HiBoard interface of the electronic device, in a first area on the interface displayed after leftward sliding is performed from the home screen of the electronic device, or in a first area on the first display interface whose display is triggered in response to the preset gesture, the first icon corresponding to the frequently used or recently used first service item, and/or performing another process of the technology described in this specification. The first area may be located at a bottom, a top, a lower right corner, or a lower left corner of the interface.

It should be noted that all related content of the steps in the foregoing method embodiment can be cited in function description of the corresponding function modules. Details are not described herein again.

The electronic device provided in this embodiment of this application is configured to perform the foregoing icon display method and the method for displaying a GUI. Therefore, an effect the same as that of the icon display method and the method for displaying a GUI can be achieved.

In a case of an integrated unit, the determining unit 1701 may be integrated into a processing module, and the first display unit and the second display unit are used as a display module. In addition, the electronic device may further include a storage module and a communications module.

The processing module is configured to control and manage an action of the electronic device. For example, the processing module is configured to support the electronic device in performing step 401 in FIG. 4, and/or performing another process of the technology described in this specification. The display module may be configured to support the electronic device in performing steps 402 and 403 in FIG. 4, and may further display a graphical user interface, an image, data, or the like to a user. The storage module is configured to store program code and data of the electronic device. The communications module is configured to support the electronic device in communicating with another network entity, for example, communicating with a server.

The processing module may be a processor or a controller, for example, a central processing unit (central processing unit, CPU), a graphics processing unit (graphics processing unit, GPU), a general purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or a combination thereof. The processing module may implement or execute various example logical blocks, modules, and circuits described with reference to content disclosed in this application. Alternatively, the processing module may be a combination of processors implementing a computing function, for example, a combination of one or more microprocessors or a combination of a DSP and a microprocessor.

The display module may be a display, and may be configured to display information entered by the user, information provided for the user, and various menus of the terminal. Specifically, the display may be configured in a form of a liquid crystal display, an organic light emitting diode, or the like. In addition, a touchpad may be further integrated into the display, and is configured to: collect a touch event on or near the touchpad, and send collected touch information to another component (such as the processor).

The storage module may be a memory. The memory may include a high-speed RAM, and may further include a nonvolatile memory such as a magnetic disk storage device, a flash storage device, or another nonvolatile solid-state storage device.

The communications module may be a device, such as a radio frequency circuit, a Bluetooth chip, or a Wi-Fi chip, that interacts with another terminal or server.

When the processing module is a processor, the display module is a display. When the storage module is a memory, the electronic device in this embodiment of this application may be specifically a mobile phone shown in FIG 3.

An embodiment of this application further provides a computer storage medium. The computer storage medium stores a computer instruction, and when the computer instruction runs on an electronic device, the electronic device performs the related method steps to implement the icon display method in the foregoing embodiment.

An embodiment of this application further provides a computer program product. When the computer program product runs on a computer, the computer is enabled to perform the related method steps to implement the icon display method in the foregoing embodiment.

In addition, an embodiment of this application further provides an apparatus. The apparatus may be specifically a chip, a component, or a module. The apparatus may include a processor and a memory that are connected. The memory is configured to store a computer executable instruction, and when the apparatus runs, the processor may execute the computer executable instruction stored in the memory, so that the chip performs the icon display method in the foregoing method embodiment.

The electronic device, the computer storage medium, the computer program product, or the chip provided in the embodiments of this application is configured to perform the corresponding method provided above. Therefore, for beneficial effects that can be achieved, refer to the beneficial effects of the corresponding method provided above. Details are not described herein again.

Another embodiment of this application provides a server. Referring to FIG. 18, the server 1800 may include a generation unit 1801 and a sending unit 1802. The generation unit 1801 may be configured to support the server 1800 in generating indication information, where the indication information includes an identifier of a first service item in a first application, and/or performing another process of the technology described in this specification. The sending unit 1802 may be configured to support the server 1800 in sending the indication information to an electronic device, where the indication information is used to instruct the electronic device to determine the first service item and display, on a display interface, an icon corresponding to the first service item, and/or performing another process of the technology described in this specification.

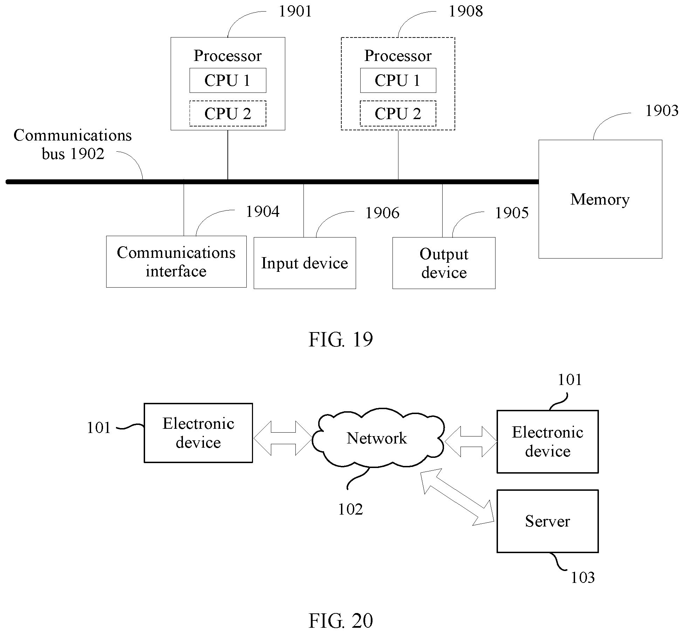

FIG. 19 is a schematic structural diagram of hardware of a server 1900 according to an embodiment of this application. The server 1900 may include at least one processor 1901, a communications bus 1902, a memory 1903, and at least one communications interface 1904.

The processor 1901 may be a general purpose CPU, a microprocessor, an ASIC, or one or more integrated circuits configured to control program execution of the solutions of this application.

The communications bus 1902 may include a channel for transmitting information between the foregoing components.

The communications interface 1904 is any apparatus such as a transceiver, and is configured to communicate with another device or communications network such as Ethernet, a radio access network (radio access network, RAN), or a wireless local area network (wireless local area network, WLAN).

The memory 1903 may be a ROM or another type of static storage device that can store static information and an instruction, or a RAM or another type of dynamic storage device that can store information and an instruction, or may be an electrically erasable programmable read-only memory, a compact disc read-only memory, other compact disc storage, or optical disc storage (including a compressed optical disc, a laser disc, an optical disc, a digital versatile disc, a Blu-ray optical disc, and the like), a magnetic disk storage medium or another magnetic storage device, or any other medium that can be used to carry or store expected program code in a form of an instruction or a data structure and that can be accessed by a computer, but is not limited thereto. The memory may exist independently, and is connected to the processor by using the bus. The memory may be alternatively integrated with the processor.

The memory 1903 is configured to store application program code used for executing the solutions of this application, and the processor 1901 controls the execution. The processor 1901 is configured to execute the application program code stored in the memory 1903, to implement a service continuity implementation method provided in the following embodiment of this application.

In specific implementation, in an embodiment, the processor 1901 may include one or more CPUs, for example, a CPU 0 and a CPU 1 in FIG. 19.

In specific implementation, in an embodiment, the server 1900 may include a plurality of processors such as the processor 1901 and a processor 1908 in FIG. 19. Each of these processors may be a single-core (single-CPU) processor, or may be a multi-core (multi-CPU) processor. The processor herein may be one or more devices, circuits, and/or processing cores for processing data (for example, a computer program instruction).

In specific implementation, in an embodiment, the server 1900 may further include an output device 1905 and an input device 1906. The output device 1905 communicates with the processor 1901, and may display information in a plurality of manners. For example, the output device 1905 may be a liquid crystal display (liquid crystal display, LCD), a light emitting diode (light emitting diode, LED) display device, a cathode ray tube (cathode ray tube, CRT) display device, or a projector (projector). The input device 1906 communicates with the processor 1901, and may receive an input of a user in a plurality of manners. For example, the input device 1906 may be a mouse, a keyboard, a touchscreen device, or a sensing device.

Another embodiment of this application further provides a system. Referring to FIG. 20, the system may include an electronic device 101, a network 102, and a server 103. The electronic device 101 sends, to the server 103 by using the network 102, information such as a date, time, and a scenario mode in which a service item is used. The server 103 sends indication information to the electronic device 101 by using the network 102, to instruct the electronic device to determine a first service item and display, on a display interface, an icon corresponding to the first service item.

The foregoing descriptions about the implementations allow a person skilled in the art to understand that, for the purpose of convenient and brief description, division of the foregoing function modules is used as an example for illustration. In actual application, the foregoing functions can be allocated to different modules and implemented based on a requirement, that is, an inner structure of an apparatus is divided into different function modules to implement all or some of the functions described above.

In the several embodiments provided in this application, it should be understood that the disclosed apparatus and method may be implemented in other manners. For example, the described apparatus embodiment is merely an example. For example, the module or unit division is merely logical function division and may be other division in actual implementation. For example, a plurality of units or components may be combined or integrated into another apparatus, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed in different places. Some or all of the units may be selected based on actual requirements to achieve the objectives of the solutions of the embodiments.

In addition, function units in the embodiments of this application may be integrated into one processing unit, or each of the units may exist alone physically, or two or more units may be integrated into one unit. The integrated unit may be implemented in a form of hardware, or may be implemented in a form of a software function unit.

When the integrated unit is implemented in the form of a software function unit and sold or used as an independent product, the integrated unit may be stored in a readable storage medium. Based on such an understanding, the technical solutions of the embodiments of this application essentially, or the part contributing to the prior art, or all or some of the technical solutions may be implemented in a form of a software product. The software product is stored in a storage medium and includes several instructions for instructing a device (which may be a single-chip microcomputer, a chip, or the like) or a processor to perform all or some of the steps of the methods described in the embodiments of this application. The foregoing storage medium includes any medium that can store program code, such as a USB flash drive, a removable hard disk, a ROM, a RAM, a magnetic disk, or an optical disc.

The foregoing descriptions are merely specific implementations of this application, but are not intended to limit the protection scope of this application. Any variation or replacement within the technical scope disclosed in this application shall fall within the protection scope of this application.

## Claims

1. An icon display method, applied to an electronic device with a touchscreen, wherein the method comprises:
automatically determining a first service item in a first application based on a service item use record and/or service item use frequency of the electronic device;
displaying a first icon on a home screen of the electronic device, wherein the first icon corresponds to the first service item; and
displaying an interaction interface of the first service item in response to an operation performed on the first icon.

2. An icon display method, applied to an electronic device with a touchscreen, wherein the method comprises:
automatically determining a first service item in a first application based on at least one of a calendar, time, or a location;
displaying a first icon on a home screen of the electronic device, wherein the first icon corresponds to the first service item; and
displaying an interaction interface of the first service item in response to an operation performed on the first icon.

3. An icon display method, applied to an electronic device with a touchscreen, wherein the method comprises:
automatically determining a first service item in a first application based on a scenario mode, wherein the scenario mode comprises at least one of an in-vehicle mode, a driving mode, a mute mode, an airplane mode, an offline mode, an outdoor mode, or a conference mode;
displaying a first icon on a home screen of the electronic device, wherein the first icon corresponds to the first service item; and
displaying an interaction interface of the first service item in response to an operation performed on the first icon.

4. The method according to any one of claims 1 to 3, wherein the home screen comprises a first area, and the displaying a first icon on a home screen of the electronic device comprises:
displaying, in the first area on the home screen, the first icon corresponding to the frequently used or recently used first service item, wherein the first area is located at a bottom, a top, a lower right corner, or a lower left corner of the home screen.

5. An icon display method, applied to an electronic device with a touchscreen, wherein the method comprises:
automatically determining a first service item in a first application based on a service item use record and/or service item use frequency of the electronic device;
displaying a first icon on a HiBoard interface of the electronic device, wherein the HiBoard interface is an interface entered after rightward sliding is performed from a home screen, and the first icon corresponds to the first service item; and
displaying an interaction interface of the first service item in response to an operation performed on the first icon.

6. An icon display method, applied to an electronic device with a touchscreen, wherein the method comprises:
automatically determining a first service item in a first application based on at least one of a calendar, time, or a location;
displaying a first icon on a HiBoard interface of the electronic device, wherein the HiBoard interface is an interface entered after rightward sliding is performed from a home screen, and the first icon corresponds to the first service item; and
displaying an interaction interface of the first service item in response to an operation performed on the first icon.

7. An icon display method, applied to an electronic device with a touchscreen, wherein the method comprises:
automatically determining a first service item in a first application based on a scenario mode, wherein the scenario mode comprises at least one of an in-vehicle mode, a driving mode, a mute mode, an airplane mode, an offline mode, an outdoor mode, or a conference mode;
displaying a first icon on a HiBoard interface of the electronic device, wherein the HiBoard interface is an interface entered after rightward sliding is performed from a home screen, and the first icon corresponds to the first service item; and
displaying an interaction interface of the first service item in response to an operation performed on the first icon.

8. The method according to any one of claims 5 to 7, wherein the HiBoard interface of the electronic device comprises a first area, and the displaying a first icon on a HiBoard interface of the electronic device comprises:
displaying, in the first area on the HiBoard interface of the electronic device, the first icon corresponding to the frequently used or recently used first service item, wherein the first area is located at a bottom, a top, a lower right corner, or a lower left corner of the interface.

9. An icon display method, applied to an electronic device with a touchscreen, wherein the method comprises:
automatically determining a first service item in a first application based on a service item use record and/or service item use frequency of the electronic device;
triggering display of a first display interface in response to a preset gesture, and displaying a first icon on the first display interface, wherein the first icon corresponds to the first service item; and
displaying an interaction interface of the first service item in response to an operation performed on the first icon.

10. An icon display method, applied to an electronic device with a touchscreen, wherein the method comprises:
automatically determining a first service item in a first application based on at least one of a calendar, time, or a location;
triggering display of a first display interface in response to a preset gesture, and displaying a first icon on the first display interface, wherein the first icon corresponds to the first service item; and
displaying an interaction interface of the first service item in response to an operation performed on the first icon.

11. An icon display method, applied to an electronic device with a touchscreen, wherein the method comprises:
automatically determining a first service item in a first application based on a scenario mode, wherein the scenario mode comprises at least one of an in-vehicle mode, a driving mode, a mute mode, an airplane mode, an offline mode, an outdoor mode, or a conference mode;
triggering display of a first display interface in response to a preset gesture, and displaying a first icon on the first display interface, wherein the first icon corresponds to the first service item; and
displaying an interaction interface of the first service item in response to an operation performed on the first icon.

12. An electronic device, wherein the electronic device comprises a touchscreen, and comprises:
a determining unit, configured to automatically determine a first service item in a first application based on a service item use record and/or service item use frequency of the electronic device; and
a display unit, configured to display a first icon on a home screen of the electronic device, wherein the first icon corresponds to the first service item, wherein
the display unit is further configured to display an interaction interface of the first service item in response to an operation performed on the first icon.

13. An electronic device, wherein the electronic device comprises a touchscreen, and comprises:
a determining unit, configured to automatically determine a first service item in a first application based on at least one of a calendar, time, or a location; and
a display unit, configured to display a first icon on a home screen of the electronic device, wherein the first icon corresponds to the first service item, wherein
the display unit is further configured to display an interaction interface of the first service item in response to an operation performed on the first icon.

14. An electronic device, wherein the electronic device comprises a touchscreen, and comprises:
a determining unit, configured to automatically determine a first service item in a first application based on a scenario mode, wherein the scenario mode comprises at least one of an in-vehicle mode, a driving mode, a mute mode, an airplane mode, an offline mode, an outdoor mode, or a conference mode; and
a display unit, configured to display a first icon on a home screen of the electronic device, wherein the first icon corresponds to the first service item, wherein
the display unit is further configured to display an interaction interface of the first service item in response to an operation performed on the first icon.

15. The electronic device according to any one of claims 12 to 14, wherein the home screen comprises a first area, and the display unit is specifically configured to:
display, in the first area on the home screen, the first icon corresponding to the frequently used or recently used first service item, wherein the first area is located at a bottom, a top, a lower right corner, or a lower left corner of the home screen.

16. An electronic device, wherein the electronic device comprises a touchscreen, and comprises:
a determining unit, configured to automatically determine a first service item in a first application based on a service item use record and/or service item use frequency of the electronic device; and
a display unit, configured to display a first icon on a HiBoard interface of the electronic device, wherein the HiBoard interface is an interface entered after rightward sliding is performed from a home screen, and the first icon corresponds to the first service item, wherein
the display unit is further configured to display an interaction interface of the first service item in response to an operation performed on the first icon.

17. An electronic device, wherein the electronic device comprises a touchscreen, and comprises:
a determining unit, configured to automatically determine a first service item in a first application based on at least one of a calendar, time, or a location; and
a display unit, configured to display a first icon on a HiBoard interface of the electronic device, wherein the HiBoard interface is an interface entered after rightward sliding is performed from a home screen, and the first icon corresponds to the first service item, wherein
the display unit is further configured to display an interaction interface of the first service item in response to an operation performed on the first icon.

18. An electronic device, wherein the electronic device comprises a touchscreen, and comprises:
a determining unit, configured to automatically determine a first service item in a first application based on a scenario mode, wherein the scenario mode comprises at least one of an in-vehicle mode, a driving mode, a mute mode, an airplane mode, an offline mode, an outdoor mode, or a conference mode; and
a display unit, configured to display a first icon on a HiBoard interface of the electronic device, wherein the HiBoard interface is an interface entered after rightward sliding is performed from a home screen, and the first icon corresponds to the first service item, wherein
the display unit is further configured to display an interaction interface of the first service item in response to an operation performed on the first icon.

19. The electronic device according to any one of claims 16 to 18, wherein the HiBoard interface of the electronic device comprises a first area, and the display unit is specifically configured to:
display, in the first area on the HiBoard interface of the electronic device, the first icon corresponding to the frequently used or recently used first service item, wherein the first area is located at a bottom, a top, a lower right corner, or a lower left corner of the interface.

20. An electronic device, wherein the electronic device comprises a touchscreen, and comprises:
a determining unit, configured to automatically determine a first service item in a first application based on a service item use record and/or service item use frequency of the electronic device; and
a display unit, configured to: trigger display of a first display interface in response to a preset gesture, and display a first icon on the first display interface, wherein the first icon corresponds to the first service item, wherein
the display unit is further configured to display an interaction interface of the first service item in response to an operation performed on the first icon.

21. An electronic device, wherein the electronic device comprises a touchscreen, and comprises:
a determining unit, configured to automatically determine a first service item in a first application based on at least one of a calendar, time, or a location; and
a display unit, configured to: trigger display of a first display interface in response to a preset gesture, and display a first icon on the first display interface, wherein the first icon corresponds to the first service item, wherein
the display unit is further configured to display an interaction interface of the first service item in response to an operation performed on the first icon.

22. An electronic device, wherein the electronic device comprises a touchscreen, and comprises:
a determining unit, configured to automatically determine a first service item in a first application based on a scenario mode, wherein the scenario mode comprises at least one of an in-vehicle mode, a driving mode, a mute mode, an airplane mode, an offline mode, an outdoor mode, or a conference mode; and
a display unit, configured to: trigger display of a first display interface in response to a preset gesture, and display a first icon on the first display interface, wherein the first icon corresponds to the first service item, wherein
the display unit is further configured to display an interaction interface of the first service item in response to an operation performed on the first icon.

23. An electronic device, comprising one or more processors and one or more memories, wherein
the one or more memories are coupled to the one or more processors, the one or more memories are configured to store computer program code, the computer program code comprises a computer instruction, and when the one or more processors execute the computer instruction, the electronic device performs the icon display method according to any one of claims 1 to 11.

24. A computer storage medium, comprising a computer instruction, wherein when the computer instruction runs on an electronic device, the electronic device is enabled to perform the icon display method according to any one of claims 1 to 11.

25. A computer program product, wherein when the computer program product runs on a computer, the computer is enabled to perform the icon display method according to any one of claims 1 to 11.

26. A method for displaying a graphical user interface (graphical user interface, GUI), wherein the method is implemented in an electronic device with a touchscreen, and the method comprises:
displaying a first GUI on the touchscreen in response to automatically determining a first service item in a first application based on a service item use record and/or service item use frequency of the electronic device, wherein a first icon is displayed on the first GUI, and the first icon corresponds to the first service item; and
displaying a second GUI on the touchscreen in response to an operation performed on the first icon, wherein an interaction interface of the first service item is displayed on the second GUI.

27. A method for displaying a GUI, wherein the method is implemented in an electronic device with a touchscreen, and the method comprises:
displaying a first GUI on the touchscreen in response to automatically determining a first service item in a first application based on at least one of a calendar, time, or a location, wherein a first icon is displayed on the first GUI, and the first icon corresponds to the first service item; and
displaying a second GUI on the touchscreen in response to an operation performed on the first icon, wherein an interaction interface of the first service item is displayed on the second GUI.

28. A method for displaying a GUI, wherein the method is implemented in an electronic device with a touchscreen, and the method comprises:
displaying a first GUI on the touchscreen in response to automatically determining a first service item in a first application based on a scenario mode, wherein a first icon is displayed on the first GUI, the first icon corresponds to the first service item, and the scenario mode comprises at least one of an in-vehicle mode, a driving mode, a mute mode, an airplane mode, an offline mode, an outdoor mode, or a conference mode; and
displaying a second GUI on the touchscreen in response to an operation performed on the first icon, wherein an interaction interface of the first service item is displayed on the second GUI.

29. The method according to any one of claims 26 to 28, wherein the first GUI is a home screen of the electronic device, a HiBoard interface of the electronic device, or a first display interface whose display is triggered in response to a preset gesture.

30. The method according to any one of claims 26 to 29, wherein the first GUI comprises a first area, and that a first icon is displayed on the first GUI comprises:
the first icon corresponding to the frequently used or recently used first service item is displayed in the first area on the first GUI, wherein the first area is located at a bottom, a top, a lower right corner, or a lower left corner of the first GUI.
